(19) Europäisches Patentamt
European Patent Office
Office européen des brevets

(11) **EP 4 152 212 A1**

(12) **EUROPEAN PATENT APPLICATION**
published in accordance with Art. 153(4) EPC

(43) Date of publication:
**22.03.2023 Bulletin 2023/12**

(51) International Patent Classification (IPC):
**G06N 3/04** [(2006.01)]

(21) Application number: **21832153.7**

(86) International application number:
**PCT/CN2021/101225**

(22) Date of filing: **21.06.2021**

(87) International publication number:
**WO 2022/001724 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.06.2020 CN 202010596738**

(71) Applicant: **Huawei Technologies Co., Ltd.
Longgang District,
Shenzhen,
Guangdong 518129 (CN)**

(72) Inventors:
• **ZHU, Yudong**
  **Shenzhen, Guangdong 518129 (CN)**
• **XIAO, Jinghui**
  **Shenzhen, Guangdong 518129 (CN)**
• **ZHOU, Di**
  **Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING METHOD AND DEVICE**

(57) This application discloses a data processing method, applied to the field of artificial intelligence, including: obtaining to-be-processed data; and processing the to-be-processed data by using a trained neural network, to output a processing result. The neural network includes a feature extraction network and a classification network. The feature extraction network is configured to extract a feature vector expressed by the to-be-processed data in hyperbolic space. The classification network is configured to process the feature vector based on an operation rule of the hyperbolic space, to obtain the processing result. In this application, precision of processing by a model a data set including a tree-like hierarchical structure can be improved, and a quantity of model parameters can be reduced.

```
┌─────────────────────────────────────────────┐
│ Obtain training data and a corresponding     │── 401
│ category label                               │
└─────────────────────────────────────────────┘
                      │
                      ▼
┌─────────────────────────────────────────────┐
│ Process the training data by using a neural  │
│ network, to output a processing result,      │
│ where the neural network includes a feature  │
│ extraction network and a classification      │── 402
│ network, the feature extraction network is   │
│ configured to extract a feature vector of    │
│ the training data, and the classification    │
│ network is configured to process the feature │
│ vector based on an operation rule of         │
│ hyperbolic space, to obtain the processing   │
│ result                                       │
└─────────────────────────────────────────────┘
                      │
                      ▼
┌─────────────────────────────────────────────┐
│ Obtain a loss based on the category label    │
│ and the processing result; and obtain, based │── 403
│ on the loss, a gradient expressed in the     │
│ hyperbolic space, and update the neural      │
│ network based on the gradient to obtain an   │
│ updated neural network                       │
└─────────────────────────────────────────────┘
```

FIG. 4

EP 4 152 212 A1

## Description

This application claims priority to Chinese Patent Application No. 202010596738.4 filed with the China National Intellectual Property Administration on June 28, 2020, and entitled "Data PROCESSING METHOD AND APPARATUS", which is incorporated herein by reference in its entirety.

## TECHNICAL FIELD

This application relates to the field of artificial intelligence, and specifically, to a data processing method and apparatus.

## BACKGROUND

Artificial intelligence (artificial intelligence, AI) is a theory, a method, a technology, or an application system that simulates, extends, and expands human intelligence by using a digital computer or a machine controlled by a digital computer, to sense an environment, obtain knowledge, and obtain an optimal result based on the knowledge. In other words, the artificial intelligence is a branch of computer science, and is intended to understand the essence of intelligence and produce a new intelligent machine that can react in a manner similar to human intelligence. The artificial intelligence is to study design principles and implementation methods of various intelligent machines, so that the machines have perception, inference, and decision-making functions.

Although a deep neural network with a complex structure has a stronger fitting capability than a shallow neural network, in many scenarios that require a balance between efficiency and effect in the industry, a shallow neural network with a simple and efficient architecture is a common choice. The shallow network has a feature of fast training and prediction and less resource usage.

However, input and middle layers of an existing shallow neural network model are constructed in Euclidean space. Description capability and parameter distribution of the model are restricted by Euclidean geometric properties.

## SUMMARY

According to a first aspect, this application provides a data processing method. The method includes: obtaining to-be-processed data.

In this embodiment of this application, a training device may obtain the to-be-processed data and a corresponding category label. The to-be-processed data may include at least one of the following: natural language data, knowledge graph data, gene data, or image data. The category label is related to a type of a task to be implemented by a to-be-trained neural network. For example, for a neural network that needs to perform text classification, a category label of the neural network is a category of the to-be-processed data. For a neural network that needs to perform semantic recognition, a category label of the neural network is semantics of the to-be-processed data.

It should be noted that a tree-like hierarchical structure is common in data types such as the natural language data, a gene sequence, and a knowledge graph. For example, the natural language data includes a plurality of words, and a word is a super-concept of another word. Further, the natural language data may be understood as data having a tree-like hierarchical structure feature.

The method further includes: processing the to-be-processed data by using a trained neural network, to output a processing result.

The neural network includes a feature extraction network and a classification network. The feature extraction network is configured to extract a feature vector expressed by the to-be-processed data in hyperbolic space. The classification network is configured to process the feature vector based on an operation rule of the hyperbolic space, to obtain the processing result.

An embodiment of this application provides a data processing method. The method includes: obtaining to-be-processed data and a corresponding category label; processing the to-be-processed data by using a neural network, to output a processing result, where the neural network includes a feature extraction network and a classification network, the feature extraction network is configured to extract a feature vector of the to-be-processed data, and the classification network is configured to process the feature vector based on an operation rule of hyperbolic space, to obtain the processing result; obtaining a loss based on the category label and the processing result; and updating the neural network based on the loss to obtain an updated neural network. Due to a feature of the hyperbolic space, expressing the feature vector in the hyperbolic space can enhance a fitting capability of a neural network model, and improve precision of processing by the model a data set including a tree-like hierarchical structure. For example, accuracy of text classification can be improved. In addition, the neural network model constructed based on the hyperbolic space greatly reduces a quantity of model parameters while improving the fitting capability of the model.

In an optional implementation, the to-be-processed data includes at least one of the following: natural language data, knowledge graph data, gene data, or image data.

In an optional implementation, the classification network includes a plurality of neurons. Each neuron is configured to process input data based on an activation function. The activation function includes the operation rule based on the hyperbolic space.

The activation function may be configured as expression of the operation rule based on the hyperbolic space. The operation rule based on the hyperbolic space includes at least one of the following: Mobius matrix multiplication and Mobius addition. The classification network may use vector algebraic transformation related to hyperbolic geometry to find a classification layer. For example, a Mobius linear classification layer is used, and its form is $O = W * \text{Mobius } X + \text{Mobius } b$, where $O$ is an output parameter of the Mobius linear, $W$ is a weight parameter, $X$ is an input parameter, and $b$ is a bias term. $*$ Mobius indicates the Mobius matrix multiplication, and $+$ Mobius indicates the Mobius addition.

In an optional implementation, the feature extraction network includes a first processing layer and a second processing layer. The first processing layer is configured to process the to-be-processed data, to obtain an embedding vector represented by the to-be-processed data in the hyperbolic space. The second processing layer is configured to calculate a geometric center of the embedding vector in the hyperbolic space, to obtain the feature vector.

The first processing layer may be an input layer, and is configured to process the to-be-processed data, to obtain the embedding vector corresponding to the to-be-processed data. After obtaining the embedding vector, the second processing layer may obtain, through calculation, the geometric center (feature vector) of the embedding vector in the hyperbolic space. Specifically, a geometric mean extraction method of the hyperbolic space may be used to extract the feature vector.

In an optional implementation, the embedding vector is expressed based on a first conformal model. The feature extraction network further includes a conformal conversion layer. The conformal conversion layer is configured to convert the embedding vector obtained by the first processing layer into a vector expressed based on a second conformal model, and input the vector expressed based on the second conformal model to the second processing layer. The second processing layer is configured to calculate a geometric center of the vector expressed based on the second conformal model, to obtain the feature vector. The conformal conversion layer is further configured to convert the feature vector obtained by the second processing layer into a vector expressed based on the first conformal model, and input the vector expressed based on the first conformal model to the classification network. The first conformal model represents that the hyperbolic space is mapped to Euclidean space in a first conformal mapping (conformal mapping) manner. The second conformal model represents that the hyperbolic space is mapped to the Euclidean space in a second conformal mapping manner.

For example, the first conformal model and the second conformal model may be a Poincare model (Poincare Model), a Hyperboloid model (Hyperboloid Model), or a Klein model. A conformal model is used to describe the hyperbolic space, and defines a series of vector algebraic transformations and geometric constraints of hyperbolic gyro vector space. Different conformal models have different properties. If the embedding vector output by the first processing layer is expressed based on the Poincare model (Poincare Model), and the second processing layer is configured to calculate a geometric average by using an Einstein midpoint, because the Einstein midpoint depends on the Klein model, the embedding vector output by the first processing layer needs to be converted into an embedding vector expressed based on the Klein model. The geometric center of the embedding vector expressed based on the Klein model is calculated by using the Einstein midpoint, to obtain the feature vector. In this case, the feature vector is expressed based on the Klein model. The conformal conversion layer is further configured to convert the feature vector obtained by the second processing layer into the vector expressed based on the first conformal model, and input the vector expressed based on the first conformal model into the classification network. In this case, the conformal conversion layer may convert the feature vector expressed based on the Klein model into a vector expressed based on the Poincare model (Poincare Model), and input the vector expressed based on the first conformal model into the classification network.

In an optional implementation, the embedding vector is expressed based on a second conformal model.

The second processing layer is configured to calculate a geometric center of the embedding vector expressed based on the second conformal model, to obtain the feature vector. The second conformal model represents that the hyperbolic space is mapped to Euclidean space in a second conformal mapping manner.

In an optional implementation, the classification network is configured to: process the feature vector based on the operation rule of the hyperbolic space to obtain a to-be-normalized vector expressed in the hyperbolic space; and map the to-be-normalized vector to the Euclidean space, and perform normalization processing on the to-be-normalized vector mapped to the Euclidean space, to obtain the processing result.

In this embodiment of this application, output of the classification layer may be converted from the hyperbolic space to the Euclidean space, and is consistent with a subsequent target loss function.

According to a second aspect, this application provides a data processing method. The method includes:

obtaining training data and a corresponding category label; and

processing the training data by using a neural network, to output a processing result.

The neural network includes a feature extraction network and a classification network. The feature extraction network is configured to extract a feature vector of the training data. The classification network is configured to process the feature vector based on an operation rule of hyperbolic space, to obtain the processing result.

The method further includes: obtaining a loss based on the category label and the processing result; and obtaining, based on the loss, a gradient expressed in the hyperbolic space, and updating the neural network based on the gradient to obtain an updated neural network.

In an optional implementation, the updating the neural network based on the gradient to obtain an updated neural network includes:

update the feature extraction network in the neural network based on the gradient, to obtain an updated feature extraction network. The updated feature extraction network is configured to extract the feature vector expressed by the training data in the hyperbolic space.

In an optional implementation, the training data includes at least one of the following: natural language data, knowledge graph data, gene data, or image data.

In an optional implementation, the classification network includes a plurality of neurons. Each neuron is configured to process input data based on an activation function. The activation function includes the operation rule based on the hyperbolic space.

In an optional implementation, the operation rule based on the hyperbolic space includes at least one of the following: Mobius Mobius matrix multiplication and Mobius addition.

In an optional implementation, the feature extraction network includes a first processing layer and a second processing layer.

The first processing layer is configured to process the training data, to obtain an embedding vector corresponding to the training data.

The second processing layer is configured to calculate a geometric center of the embedding vector in the hyperbolic space, to obtain the feature vector.

In an optional implementation, the embedding vector is expressed based on a first conformal model.

The feature extraction network further includes a conformal conversion layer.

The conformal conversion layer is configured to convert the embedding vector obtained by the first processing layer into a vector expressed based on a second conformal model, and input the vector expressed based on the second conformal model to the second processing layer.

Correspondingly, the second processing layer is configured to calculate a geometric center of the vector expressed based on the second conformal model, to obtain the feature vector.

The conformal conversion layer is further configured to convert the feature vector obtained by the second processing layer into a vector expressed based on the first conformal model, and input the vector expressed based on the first conformal model to the classification network. The first conformal model represents that the hyperbolic space is mapped to Euclidean space in a first conformal mapping (conformal mapping) manner. The second conformal model represents that the hyperbolic space is mapped to the Euclidean space in a second conformal mapping manner.

In an optional implementation, data in the hyperbolic space is expressed based on a second conformal model. The second conformal model represents that the hyperbolic space is mapped to Euclidean space in a second conformal mapping manner. The embedding vector is expressed based on the second conformal model.

The second processing layer is configured to calculate a geometric center of the embedding vector expressed based on the second conformal model, to obtain the feature vector.

In an optional implementation, the classification network is configured to: process the feature vector based on the operation rule of the hyperbolic space to obtain a to-be-normalized vector expressed in the hyperbolic space; and map the to-be-normalized vector to the Euclidean space, and perform normalization processing on the to-be-normalized vector mapped to the Euclidean space, to obtain the processing result.

In an optional implementation, the obtaining a loss based on the category label and the processing result includes:

obtaining the loss based on the category label, the processing result, and a target loss function. The target loss function is a function expressed in the Euclidean space.

In an optional implementation, the updating the neural network based on the loss includes:

calculating the gradient corresponding to the loss, where the gradient is expressed in the Euclidean space;
converting the gradient to a gradient expressed in the hyperbolic space; and
updating the neural network based on the gradient expressed in the hyperbolic space.

According to a third aspect, this application provides a data classification apparatus. The apparatus includes:

an obtaining module, configured to obtain to-be-processed data; and

a processing module, configured to process the to-be-processed data by using a trained neural network, to output a processing result.

The neural network includes a feature extraction network and a classification network. The feature extraction network is configured to extract a feature vector expressed by the to-be-classification data in hyperbolic space. The classification network is configured to process the feature vector based on an operation rule of the hyperbolic space, to obtain the processing result.

In an optional implementation, the to-be-processed data includes at least one of the following: natural language data, knowledge graph data, gene data, or image data.

In an optional implementation, the classification network includes a plurality of neurons. Each neuron is configured to process input data based on an activation function. The activation function includes the operation rule based on the hyperbolic space.

In an optional implementation, the feature extraction network includes a first processing layer and a second processing layer.

The first processing layer is configured to process the to-be-processed data, to obtain an embedding vector represented by the to-be-processed data in the hyperbolic space.

The second processing layer is configured to calculate a geometric center of the embedding vector in the hyperbolic space, to obtain the feature vector.

In an optional implementation, the embedding vector is expressed based on a first conformal model.

The feature extraction network further includes a conformal conversion layer.

The conformal conversion layer is configured to convert the embedding vector obtained by the first processing layer into a vector expressed based on a second conformal model, and input the vector expressed based on the second conformal model to the second processing layer.

The second processing layer is configured to calculate a geometric center of the vector expressed based on the second conformal model, to obtain the feature vector.

The conformal conversion layer is further configured to convert the feature vector obtained by the second processing layer into a vector expressed based on the first conformal model, and input the vector expressed based on the first conformal model to the classification network. The first conformal model represents that the hyperbolic space is mapped to Euclidean space in a first conformal mapping (conformal mapping) manner. The second conformal model represents that the hyperbolic space is mapped to the Euclidean space in a second conformal mapping manner.

In an optional implementation, the embedding vector is expressed based on a second conformal model.

The second processing layer is configured to calculate a geometric center of the embedding vector expressed based on the second conformal model, to obtain the feature vector. The second conformal model represents that the hyperbolic space is mapped to Euclidean space in a second conformal mapping manner.

In an optional implementation, the classification network is configured to: process the feature vector based on the operation rule of the hyperbolic space to obtain a to-be-normalized vector expressed in the hyperbolic space; and map the to-be-normalized vector to the Euclidean space, and perform normalization processing on the to-be-normalized vector mapped to the Euclidean space, to obtain the processing result.

According to a fourth aspect, this application provides a data processing apparatus. The apparatus includes:

an obtaining module, configured to obtain training data and a corresponding category label;

a processing module, configured to process the training data by using a neural network, to output a processing result.

The neural network includes a feature extraction network and a classification network. The feature extraction network is configured to extract a feature vector of the training data. The classification network is configured to process the feature vector based on an operation rule of hyperbolic space, to obtain the processing result. obtaining a loss based on the category label and the processing result; and

The apparatus further includes a model update module, configured to obtain, based on the loss, a gradient expressed in the hyperbolic space, and update the neural network based on the gradient to obtain an updated neural network.

In an optional implementation, the model update module is configured to: update the feature extraction network in the neural network based on the gradient, to obtain an updated feature extraction network. The updated feature extraction network is configured to extract the feature vector expressed by the training data in the hyperbolic space.

In an optional implementation, the training data includes at least one of the following: natural language data, knowledge graph data, gene data, or image data.

In an optional implementation, the classification network includes a plurality of neurons. Each neuron is configured to process input data based on an activation function. The activation function includes the operation rule based on the hyperbolic space.

In an optional implementation, the feature extraction network includes a first processing layer and a second processing layer.

The first processing layer is configured to process the training data, to obtain an embedding vector corresponding to the training data.

The second processing layer is configured to calculate a geometric center of the embedding vector in the hyperbolic space, to obtain the feature vector.

In an optional implementation, the embedding vector is expressed based on a first conformal model.

The feature extraction network further includes a conformal conversion layer.

The conformal conversion layer is configured to convert the embedding vector obtained by the first processing layer into a vector expressed based on a second conformal model, and input the vector expressed based on the second conformal model to the second processing layer.

Correspondingly, the second processing layer is configured to calculate a geometric center of the vector expressed based on the second conformal model, to obtain the feature vector.

The conformal conversion layer is further configured to convert the feature vector obtained by the second processing layer into a vector expressed based on the first conformal model, and input the vector expressed based on the first conformal model to the classification network. The first conformal model represents that the hyperbolic space is mapped to Euclidean space in a first conformal mapping (conformal mapping) manner. The second conformal model represents that the hyperbolic space is mapped to the Euclidean space in a second conformal mapping manner.

In an optional implementation, data in the hyperbolic space is expressed based on a second conformal model. The second conformal model represents that the hyperbolic space is mapped to Euclidean space in a second conformal mapping manner. The embedding vector is expressed based on the second conformal model.

The second processing layer is configured to calculate a geometric center of the embedding vector expressed based on the second conformal model, to obtain the feature vector.

In an optional implementation, the classification network is configured to: process the feature vector based on the operation rule of the hyperbolic space to obtain a to-be-normalized vector expressed in the hyperbolic space; and map the to-be-normalized vector to the Euclidean space, and perform normalization processing on the to-be-normalized vector mapped to the Euclidean space, to obtain the processing result.

In an optional implementation, the loss obtaining module is configured to obtain the loss based on the category label, the processing result, and a target loss function. The target loss function is a function expressed in the Euclidean space.

In an optional implementation, the model update module is configured to: calculate the gradient corresponding to the loss, where the gradient is expressed in the Euclidean space; convert the gradient to a gradient expressed in the hyperbolic space; and update the neural network based on the gradient expressed in the hyperbolic space.

This application discloses a data processing method, including: obtaining to-be-processed data; and processing the to-be-processed data by using a trained neural network, to output a processing result. The neural network includes a feature extraction network and a classification network. The feature extraction network is configured to extract a feature vector expressed by the to-be-processed data in hyperbolic space. The classification network is configured to process the feature vector based on an operation rule of the hyperbolic space, to obtain the processing result. In this application, precision of processing by a model a data set including a tree-like hierarchical structure can be improved, and a quantity of model parameters can be reduced.

## BRIEF DESCRIPTION OF DRAWINGS

FIG. 1 is a schematic diagram of a structure of an artificial intelligence main framework;
FIG. 2a shows a natural language processing system;
FIG. 2b shows another natural language processing system;
FIG. 2c is a schematic diagram of a device related to natural language processing according to an embodiment of this application;
FIG. 3 is a schematic diagram of an architecture of a system 100 according to an embodiment of this application;
FIG. 4 is a schematic flowchart of a data processing method according to an embodiment of this application;
FIG. 5 is a schematic diagram of a structure of a feature extraction network according to an embodiment of this application;
FIG. 6 is a schematic diagram of a structure of a classification network according to an embodiment of this application;
FIG. 7 is a schematic diagram of a structure of a Riemann optimizer according to an embodiment of this application;

FIG. 8 is a schematic diagram of a structure of a system according to an embodiment of this application;
FIG. 9 is a schematic diagram of a structure of a system according to an embodiment of this application;
FIG. 10 is a schematic flowchart of a data processing method according to an embodiment of this application;
FIG. 11 is a schematic diagram of a data processing apparatus according to an embodiment of this application;
FIG. 12 is a schematic diagram of a data processing apparatus according to an embodiment of this application;
FIG. 13 is a schematic diagram of a structure of an execution device according to an embodiment of this application;
FIG. 14 is a schematic diagram of a structure of a training device according to an embodiment of this application; and
FIG. 15 is a schematic diagram of a structure of a chip according to an embodiment of this application.

## DESCRIPTION OF EMBODIMENTS

The following describes embodiments of the present invention with reference to the accompanying drawings in embodiments of the present invention. Terms used in an implementation part of the present invention are intended only to explain specific embodiments of the present invention, and not intended to limit the present invention.

The following describes embodiments of this application with reference to accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

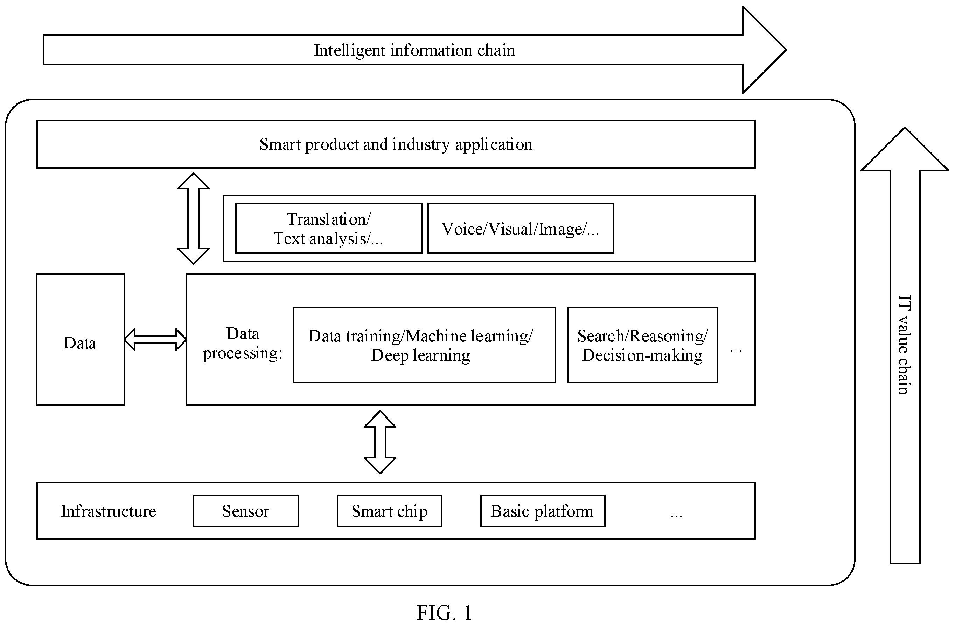

An overall working procedure of an artificial intelligence system is first described. Refer to FIG. 1. FIG. 1 shows a schematic diagram depicting a structure of an artificial intelligence main framework. The following describes the foregoing artificial intelligence main framework from two dimensions: "intelligent information chain" (horizontal axis) and "IT value chain" (vertical axis). The "intelligent information chain" reflects a general process from data obtaining to data processing. For example, the process may be a general process of intelligent information perception, intelligent information representation and formation, intelligent inference, intelligent decision-making, and intelligent execution and output. In this process, data undergoes a condensation process of "data-information-knowledge-wisdom". The "IT value chain" reflects a value brought by artificial intelligence to the information technology industry in a process from an underlying infrastructure and information (providing and processing technology implementation) of human intelligence to a systemic industrial ecology.

(1) Infrastructure

The infrastructure provides computing capability support for the artificial intelligence system, implements communication with the external world, and implements support by using a base platform. External communication is performed by using a sensor. The computing capability is provided by an intelligent chip (a hardware acceleration chip, for example, a CPU, an NPU, a GPU, an ASIC, or an FPGA). The base platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system for computation, where the distributed computing system is provided by the base platform.

(2) Data

Data at an upper layer of the infrastructure indicates a data source in the artificial intelligence field. The data relates to a graph, an image, a voice, and text, further relates to internet of things data of a conventional device, and includes service data of an existing system and perception data such as force, displacement, a liquid level, a temperature, and humidity.

(3) Data processing

Data processing usually includes manners such as data training, machine learning, deep learning, searching, inference, and decision-making.

Machine learning and deep learning may mean performing symbolized and formalized intelligent information modeling, extraction, preprocessing, training, and the like on data.

Inference is a process in which a pattern of human intelligent inference is simulated in a computer or an intelligent system, and machine thinking and problem resolving are performed by using formalized information according to an inferring control policy. A typical function is searching and matching.

Decision-making is a process in which a decision is made after intelligent information is inferred, and usually provides functions such as classification, ranking, and prediction.

(4) General capabilities

After data processing mentioned above is performed on data, some general capabilities may further be formed based on a data processing result, for example, an algorithm or a general system, such as translation, text analysis, computer vision processing, speech recognition, and image recognition.

(5) Intelligent product and industry application

Intelligent products and industry applications refer to products and applications of artificial intelligence systems in various fields, and are encapsulation for an overall artificial intelligence solution, to productize intelligent information decision-making and implement applications. Application fields thereof mainly include intelligent terminal, intelligent transportation, intelligent healthcare, autonomous driving, safe city, and the like.

The following describes several application scenarios of this application.

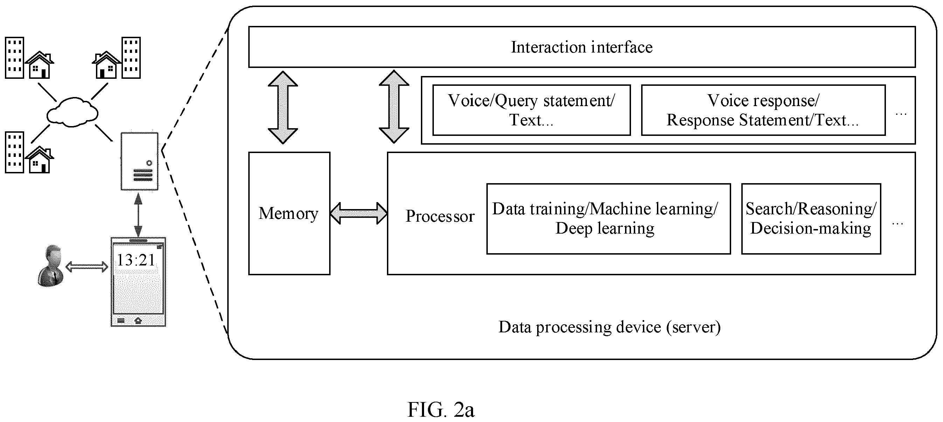

FIG. 2a shows a natural language processing system. The natural language processing system includes user equipment and a data processing device. The user equipment includes an intelligent terminal such as a mobile phone, a personal computer, or an information processing center. The user equipment is an initiating end of natural language data processing. As an initiator of a request for language questioning and answering, querying, or the like, a user usually initiates the request by using the user equipment.

The data processing device may be a device or a server having a data processing function, such as a cloud server, a network server, an application server, or a management server. The data processing device receives, through an interaction interface, a question such as a query statement/voice/text from the intelligent terminal, and then performs, by using a memory storing data and a processor processing data, language data processing in a manner of machine learning, deep learning, searching, inference, decision-making, or the like. The memory in the data processing device may be a general name, and includes a local storage and a database storing historical data. The database may be located on the data processing device, or may be located on another network server.

In the natural language processing system shown in FIG. 2a, the user equipment may receive an instruction of the user. For example, the user equipment may receive a piece of text entered by the user, and then initiate a request to the data processing device, so that the data processing device executes a natural language processing application (for example, text classification, text inference, named entity recognition, or translation) on the piece of text obtained by the user equipment, to obtain a processing result (for example, a processing result, an inference result, a named entity recognition result, or a translation result) of a corresponding natural language processing application for the piece of text. For example, the user equipment may receive a piece of Chinese text entered by the user, and then initiate a request to the data processing device, so that the data processing device performs entity classification on the piece of Chinese text, to obtain an entity processing result for the piece of Chinese text. For example, the user equipment may receive a piece of Chinese text entered by the user, and then initiate a request to the data processing device, so that the data processing device translates the piece of Chinese text into English, to obtain an English translation for the piece of Chinese text.

In FIG. 2a, the data processing device may perform the data processing method in embodiments of this application.

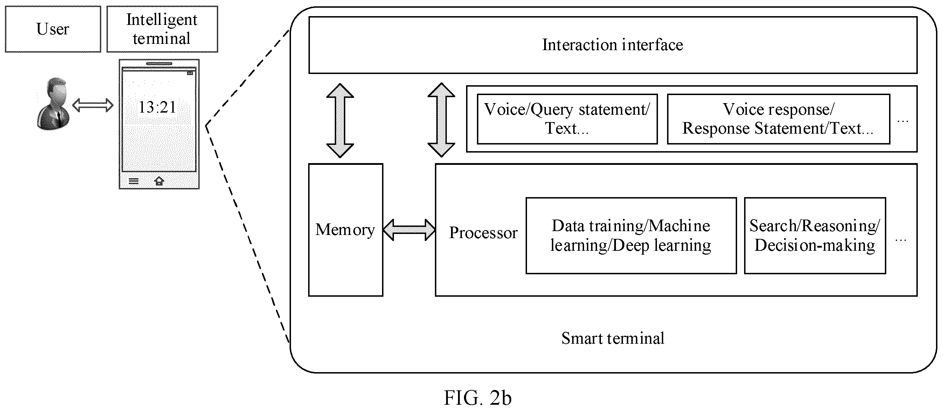

FIG. 2b shows another natural language processing system. In FIG. 2b, user equipment is directly used as a data processing device. The user equipment can directly receive an input from a user, and the input is directly processed by using hardware of the user equipment. A specific process is similar to that in FIG. 2a. Refer to the foregoing descriptions, and details are not described herein again.

In the natural language processing system shown in FIG. 2b, the user equipment may receive an instruction of the user. For example, the user equipment may receive a piece of text entered by the user, and then the user equipment executes a natural language processing application (for example, text classification, text inference, named entity recognition, or translation) on the piece of text, to obtain a processing result (for example, a processing result, an inference result, a named entity recognition result, or a translation result) of a corresponding natural language processing application for the piece of text. For example, the user equipment may receive a piece of Chinese text entered by the user, and perform entity classification on the piece of Chinese text, to obtain an entity processing result for the piece of Chinese text. For example, the user equipment may receive a piece of Chinese text entered by the user, and translate the piece of Chinese text into English, to obtain an English translation for the piece of Chinese text.

In FIG. 2b, the user equipment may perform the data processing method in embodiments of this application.

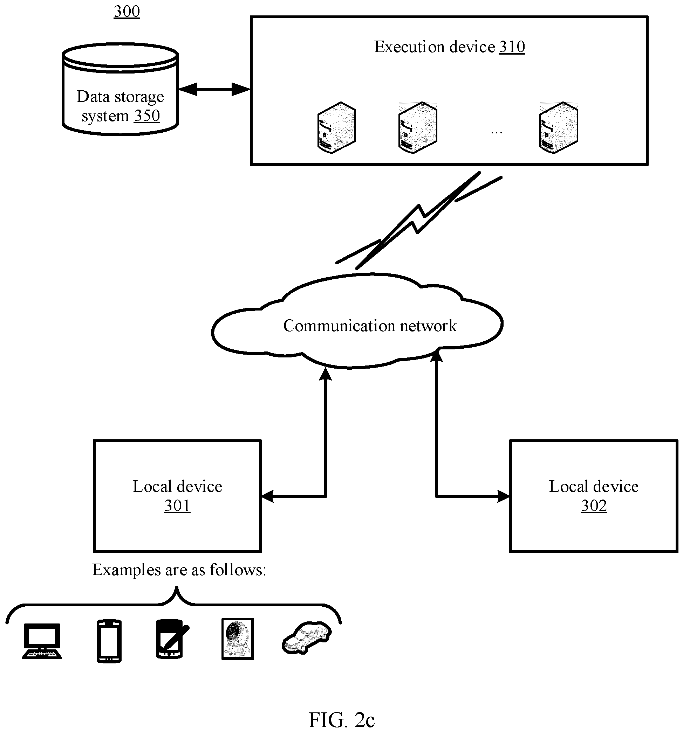

FIG. 2c is a schematic diagram of a device related to natural language processing according to an embodiment of this application.

The user equipment in FIG. 2a and FIG. 2b may be specifically a local device 301 or a local device 302 in FIG. 2c. The data processing device in FIG. 2a may be specifically an execution device 310 in FIG. 2c. A data storage system 350 may store data to be processed by the execution device 310. The data storage system 350 may be integrated into the execution device 310, or may be disposed on a cloud or another network server.

The processor in FIG. 2a and FIG. 2b may perform data training/machine learning/deep learning by using a neural network model or another model (for example, a support vector machine-based model), and execute a natural language processing application (for example, text classification, sequence labeling, reading comprehension, text generation, text inference, translation) on a text sequence by using a model obtained through final data training or learning, to obtain a corresponding processing result.

In addition, this application may be further applied to knowledge graph data processing, gene data processing, picture classification processing, and the like.

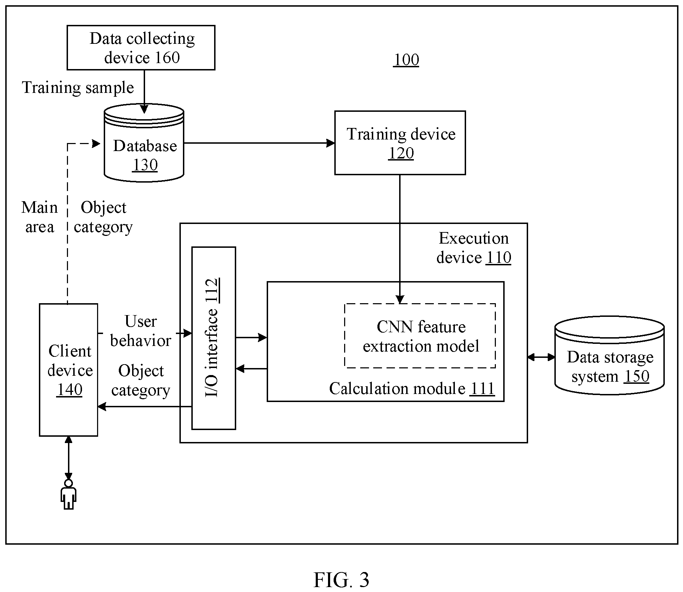

FIG. 3 is a schematic diagram of an architecture of a system 100 according to an embodiment of this application. In FIG. 3, an input/output (input/output, I/O) interface 112 is configured for an execution device 110, to exchange data with an external device. A user may input data to the I/O interface 112 through a client device 140. The input data may include to-be-scheduled tasks, callable resources, and other parameters in this embodiment of this application.

In a process in which the execution device 110 preprocesses the input data, or in a process in which a calculation module 111 of the execution device 110 performs related processing such as calculation (for example, implements a function of the neural network in this application), the execution device 110 may invoke data, code, and the like in a data storage system 150 for corresponding processing; or may store data, instructions, and the like obtained through corresponding processing into the data storage system 150.

Finally, the I/O interface 112 returns a processing result to the client device 140, to provide the processing result for the user.

It should be noted that the training device 120 may generate corresponding target models/rules for different targets or different tasks based on different training data. The corresponding target models/rules may be used to implement the targets or complete the tasks, to provide a required result for the user.

In a case shown in FIG. 3, the user may manually input data and the user may input the data on an interface provided by the I/O interface 112. In another case, the client device 140 may automatically send the input data to the I/O interface 112. If it is required that the client device 140 needs to obtain authorization from the user to automatically send the input data, the user may set corresponding permission on the client device 140. The user may view, on the client device 140, the result output by the execution device 110. Specifically, the result may be displayed or may be presented in a form of a sound, an action, or the like. The client device 140 may also serve as a data collector to collect, as new sample data, the input data that is input to the I/O interface 112 and the output result that is output from the I/O interface 112 shown in the figure, and store the new sample data in the database 130. Certainly, the client device 140 may alternatively not perform collection. Instead, the I/O interface 112 directly stores, in the database 130 as new sample data, the input data that is input to the I/O interface 112 and the output result that is output from the I/O interface 112 in the figure.

It should be noted that FIG. 3 is merely a schematic diagram of a system architecture according to an embodiment of this application. A location relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, the neural network may be obtained through training based on the training device 120.

An embodiment of this application further provides a chip. The chip includes a neural network processing unit NPU 50. The chip may be disposed in the execution device 110 shown in FIG. 3, to complete computing work of the computing module 111. Alternatively, the chip may be disposed in the training device 120 shown in FIG. 3, to complete the training work of the training device 120 and output a target model/rule.

A neural network processing unit NPU 40 serves as a coprocessor, and may be disposed on a host central processing unit (central processing unit, CPU) (host CPU). The host CPU assigns a task. A core part of the NPU is an operation circuit 403. A controller 404 controls the operation circuit 403 to extract data in a memory (a weight memory or an input memory) and perform an operation.

In some implementations, the operation circuit 403 internally includes a plurality of processing units (process engine, PE). In some implementations, the operation circuit 403 is a two-dimensional systolic array. The operation circuit 403 may alternatively be a one-dimensional systolic array or another electronic circuit capable of performing mathematical operations such as multiplication and addition. In some implementations, the operation circuit 403 is a general-purpose matrix processor.

For example, it is assumed that there is an input matrix A, a weight matrix B, and an output matrix C. The operation circuit fetches corresponding data of the matrix B from a weight memory 402, and buffers the data on each PE in the operation circuit. The operation circuit obtains data of the matrix A from the input memory 401, performs a matrix operation on the data and the matrix B, and stores an obtained partial result or final result of the matrix in an accumulator (accumulator) 408.

A vector calculation unit 407 may perform further processing on the output of the operation circuit, for example, vector multiplication, vector addition, exponential operation, logarithmic operation, and value comparison. For example, the vector calculation unit 407 may be configured to perform network calculation at a non-convolutional/non-FC layer in a neural network, for example, pooling (pooling), batch normalization (batch normalization), and local response normalization (local response normalization).

In some implementations, the vector calculation unit 407 can store a processed output vector into a unified buffer 406. For example, the vector calculation unit 407 may apply a non-linear function to the output of the operation circuit 403, for example, a vector of an accumulated value, to generate an activation value. In some implementations, the vector calculation unit 407 generates a normalized value, a combined value, or both. In some implementations, the processed and output vector can be used as an activation input to the operation circuit 403, for example, for use in subsequent layers in the neural network.

A unified memory 406 is configured to store input data and output data.

Weight data is directly transferred to the weight memory 402 by using a direct memory access controller (direct memory access controller, DMAC) 405, input data in an external memory is transferred to the input memory 401 and/or the unified memory 406, weight data in the external memory is stored in the weight memory 402, and the data in the unified memory 406 is stored in the external memory.

A bus interface unit (bus interface unit, BIU) 410 is configured to implement interaction between the main CPU, the DMAC, and an instruction fetch buffer 409 through a bus.

The instruction fetch buffer (instruction fetch buffer) 409 connected to the controller 404 is configured to store an instruction used by the controller 404.

The controller 404 is configured to invoke the instruction buffered in the instruction fetch buffer 409, to control a working process of the operation accelerator.

Generally, the unified memory 406, the input memory 401, the weight memory 402, and the instruction fetch buffer 409 are all on-chip (On-Chip) memories. The external memory is a memory outside the NPU, and the external memory may be a double data rate synchronous dynamic random access memory (double data rate synchronous dynamic random access memory, DDR SDRAM), a high bandwidth memory (high bandwidth memory, HBM) or another readable and writable memory.

Because embodiments of this application relate to massive application of neural networks, for ease of understanding, the following first describes related terms and related concepts such as neural network in embodiments of this application.

(1) Neural network

The neural network may include neurons. The neuron may be an operation unit that uses $x_s$ and an intercept of 1 as an input. An output of the operation unit may be as follows:

$$h_{W,b}(x) = f(W^T x) = f(\sum_{s=1}^{n} W_s x_s + b) \quad (1\text{-}1)$$

s=1, 2, ..., or n, n is a natural number greater than 1, $W_s$ is a weight of $x_s$, and b is bias of the neuron. f is an activation function (activation functions) of the neuron, and is configured to introduce a non-linear feature into the neural network to convert an input signal in the neuron into an output signal. The output signal of the activation function may be used as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Working of each layer in a deep neural network may be described by using a mathematical expression $\vec{y} = a(W\vec{x} + b)$. From a physical perspective, the working of each layer in the deep neural network may be understood as completing transformation from an input space to an output space (that is, from a row space to a column space of a matrix) by performing five operations on the input space (a set of input vectors). The five operations include: 1. dimension increasement/dimension reduction; 2. zooming in/zooming out; 3. rotation; 4. translation; and 5. "bending". The operations 1, 2, and 3 are completed by $W\vec{x}$, the operation 4 is completed by +b, and the operation 5 is implemented by $a()$. The word "space" is used herein for expression because a classified object is not a single thing, but a type of things. Space is a collection of all individuals of such type of things. W is a weight vector, and each value of the vector represents a weighting value of a neuron in this layer of neural network. The vector W determines space transformation from the input space to the output space described above. In other words, a weight W at each layer controls how to transform space. A purpose of training the deep neural network is to finally obtain a weight matrix (a weight matrix formed by vectors W at a plurality of layers) at all layers of a trained neural network. Therefore, the training process of the neural network is essentially a manner of learning control of space transformation, and more specifically, learning a weight matrix.

Because it is expected that an output of the deep neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is forward transmitted until an error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

(3) Natural language processing (natural language processing, NLP)

A natural language (natural language) is a human language, and natural language processing (NLP) is processing of the human language. Natural language processing is a process of systematic analysis, understanding, and information extraction of text data in an intelligent and efficient manner. By using NLP and its components, we can manage very large chunks of text data, or perform a lot of automated tasks, and resolve various problems, such as automatic summarization (automatic summarization), machine translation (machine translation, MT), named entity recognition (named entity recognition, NER), relation extraction (relation extraction, RE), information extraction (information extraction, IE), emotion analysis, speech recognition (speech recognition), question answering (question answering) system, and topic segmentation.

For example, there may be the following types of natural language processing tasks.

Sequence labeling: A model needs to provide a classification category for each word in a sentence based on a context. For example, the sequence labeling is Chinese word segmentation, part-of-speech tagging, named entity recognition, or semantic role tagging.

Classification task: A classification value is output for the entire sentence. For example, the classification task is text classification.

Sentence relation inference: Two sentences are given, and whether the two sentences have a nominal relation is determined. For example, the sentence relation inference is entilment, QA, semantic rewriting, or natural language inference.

Generative task: One piece of text is output and another piece of text is generated. For example, the generative task is machine translation, text summarization, writing poems and sentences, describing a picture orally.

The following provides some natural language processing examples.

Word segmentation (word segmentation or word breaker, WB): Continuous natural language data is segmented into lexical sequences with semantic rationality and integrity, to eliminate a cross ambiguity. Example sentence: zhi bi ye he shang wei bi ye de tong xue. Word segmentation 1: zhi biye he shangwei biye de tongxue. Word segmentation 2: zhi biye heshang wei biye de tongxue.

Named entity recognition (named entity recognition, NER): Entities (person, place, institution, time, works, and the like) having specific meanings in natural language data are recognized, to integrate unknown words at a granularity. Example sentence: tian shi ai mei li zai xian guan kan. Word segmentation: tianshi ai meili zaixian guankan. Entity: Angel Amelie -> Movie.

Part-of-speech tagging (part-speech tagging): A part-of-speech (noun, verb, adjective, or the like) is assigned to each word in natural language data. Dependency parsing (dependency parsing): Syntactic elements (subject, predicate, object, attributive, adverbial, complement, and the like) in a sentence are automatically analyzed, to eliminate a structural ambiguity. Comment: fang jian li hai ke yi xin shang ri chu. Ambiguity 1: fang jian hai ke yi. Ambiguity 2: ke yi xin shang ri chu. Part of speech: fang jian li (subject), hai ke yi (predicate), xin shang ri chu (verb-object phrase).

Word vector and semantic similarity (word embedding & semantic similarity): Words are represented in a vectorized manner, and semantic similarity of the words is calculated based on the vectorized representation, to resolve a problem of linguistic similarity between the words. For example, which one (dai gua/cao mei) does xi gua approximate? Vectorized representation: xi gua (0.1222, 0.22333, ...); similarity calculation: dai gua (0.115) and cao mei (0.325); and vectorized representation: (-0.333, 0.1223, ...) (0.333, 0.3333, ...).

Text semantic similarity (text semantic similarity): Based on massive data in the entire network and a deep neural network technology, semantic similarity between pieces of text is calculated, to resolve a problem of text semantic similarity. For example, which one (qian pai zhao zen me zhuang/ru he ban li Beijing pai zhao) does che tou ru he fang zhi che pai approximate? Vectorized representation: che tou ru he fang zhi che pai (0.1222, 0.22333, ...); similarity calculation: qian pai zhao zen me zhuang (0.762) and ru he ban li Beijing pai zhao (0.486); and vectorized representation: (-0.333, 0.1223, ...) (0.333, 0.3333, ...).

(4) Language model (language model, LM)

The language model is a basic model in NPL. Through a large amount of corpus training and learning, the LM can infer a probability of an unknown word based on existing information (for example, text information such as a word that is present in a context). The LM may also be understood as a probability model used to calculate a probability of a sentence. In other words, the language model is a probability distribution of a natural language data sequence, and the probability distribution represents a possibility of existence of text with a specific sequence and a specific length. In short, the language model predicts a next word based on a context. Because there is no need to manually tag a corpus, the language model can learn rich semantic knowledge from an unlimited large-scale corpus.

(5) Large-scale pre-trained language model (large scale pretrained language model)

The large-scale pre-trained language model may also be referred to as a large-scale language pre-trained model. Generally, by using a large-scale corpus (for example, language training materials such as sentences and paragraphs), a language model training task is designed, and a large-scale neural network algorithm structure is trained to learn; and a finally obtained large-scale neural network algorithm structure is the large-scale pre-trained language model. For another subsequent task, feature extraction or task fine-tuning may be performed based on the model to fulfill a specific task. An idea of pre-training is to first train a task to obtain a set of model parameters, then initialize network model parameters by using the set of model parameters, and then train another task by using an initialized network model, to obtain a model adapted to the another task. Through pre-training by using the large-scale corpus, a neural language representation model can learn a powerful language representation capability and can extract rich syntactic and semantic information from text. The large-scale pre-trained language model may provide a sentence-level feature and a token that includes rich semantic information used by a downstream task, or perform fine-tuning (fine-tune) for a downstream task directly on the basis of the pre-trained model. In this way, a downstream dedicated model is quickly and conveniently obtained.

(6) Knowledge graph (knowledge graph)

The knowledge graph describes various entities or concepts and relations between the entities or concepts in the real world, and forms a huge semantic network diagram, where a node represents an entity or a concept, and an edge is constituted by an attribute or a relation. An association between two entities is described by using a relation, for example, a relation between Beijing and China. For an attribute of an entity, an "attribute-value pair" is used to describe an intrinsic characteristic, for example, a person has attributes such as age, height, and weight. Currently, the knowledge graph has been widely used to refer to various large-scale knowledge bases (knowledge base).

Entity: The entity refers to an object that is distinguishable and exists independently, for example, a person, a city, a plant, or a commodity. Everything in the world is constituted by concrete objects, which refer to entities, for example, "China", "United States", and "Japan". The entity is a most basic element in the knowledge graph. There are different relations between different entities.

Semantic category (concept): The semantic category is a collection of entities with a same characteristic, such as a country, a nationality, a book, and a computer. The concept is mainly a collection, a category, an object type, or a thing type, for example, people or geography.

The content is usually used as names, descriptions, and interpretations of entities and semantic categories, and may be expressed by text, images, and audio/videos.

Attribute (value) (property): The attribute points to an attribute value of an entity from the entity. Different attribute types correspond to edges of different types of attributes. The attribute value refers to a value of an attribute specified by an object. For example, "area", "population", and "capital" are several different attributes of the entity "China". The attribute value mainly refers to the value of the attribute specified by the object. For example, a value of the area attribute specified by "China" is "9.6 million square kilometers".

Relation (relation): The relation is formalized as a function that maps kk points to a Boolean value. In the knowledge graph, the relation is a function that maps kk graph nodes (entities, semantic categories, attribute values) to a Boolean value.

Based on the foregoing definition, to facilitate processing and understanding by a computer, knowledge may be represented in a more formalized and concise manner, that is, by using a triple (triple). A triple-based manner is a general representation manner of the knowledge graph. Basic forms of the triple mainly include (entity 1-relation-entity 2), (entity-attribute-attribute value), and the like. Each entity (an extension of a concept) may be identified by using a globally uniquely determined ID, each attribute-attribute-value pair (attribute-value pair, AVP) may be used to describe an intrinsic characteristic of the entity, and a relation may be used to connect two entities and describe an association between the two entities. For example, China is an entity, Beijing is an entity, and (China-capital-Beijing) is a triple example of (entity-relation-entity); and Beijing is an entity, area is an attribute, 20,693,000 is an attribute value, and (Beijing-population-20,693,000) is a triple example of (entity-attribute-attribute value). A difference between an attribute and a relation lies in that, two entities corresponding to a triple in which the attribute is located are mostly one entity and one character string, but two entities corresponding to a triple in which the relation is located are mostly two entities. In the embodiments of this application, for ease of understanding and description, an attribute value in a triple in which the attribute is located is also considered as an entity, and the attribute is considered as an association between the two entities. In other words, in the embodiments of this application, knowledge represented based on a triple is used to indicate an association between two entities. The association between the two entities may be a relation between the two entities (for example, (entity 1-relation-entity 2)); or the association between the two entities may be an attribute of one of the entities, and the other entity is an attribute value of the attribute (for example, (entity-attribute-attribute value)). In the embodiments of this application, the knowledge represented based on a triple may also be referred to as structured knowledge. It should be further understood that representation forms of the triple are not limited to the foregoing forms of (entity 1-relation-entity 2) and (entity-attribute-attribute value). For example, the representation forms may further include (entity 1-entity 2-relation) and (entity-attribute value-attribute). In some embodiments, the attribute may also be considered as a relation in a broad sense.

The text processing method in this application may be used to perform a natural language processing task on a natural language data sequence. For different natural language processing tasks (that is, target tasks in this application), target processing models used to process the natural language data sequence are different. The following describes the method provided in this application from a training side of a neural network and an application side of the neural network.

A neural network training method provided in embodiments of this application relates to natural language data processing, and may be specifically applied to data processing methods such as data training, machine learning, and deep learning, to perform symbolic and formalized intelligence information modeling, extraction, preprocessing, training, and the like on training data (for example, training text and first knowledge data in this application), to finally obtain a trained target processing model. In addition, according to a text processing method provided in embodiments of this application, input data (for example, to-be-processed text in this application) may be input into the trained target processing model by using the foregoing trained target processing model, to obtain output data (for example, a processing result corresponding to a target task in this application). It should be noted that the target processing model training method and the text processing method that are provided in the embodiments of this application are inventions generated based on a same concept, and may also be understood as two parts of a system, or two phases of an entire process, for example, a model training phase and a model application phase.

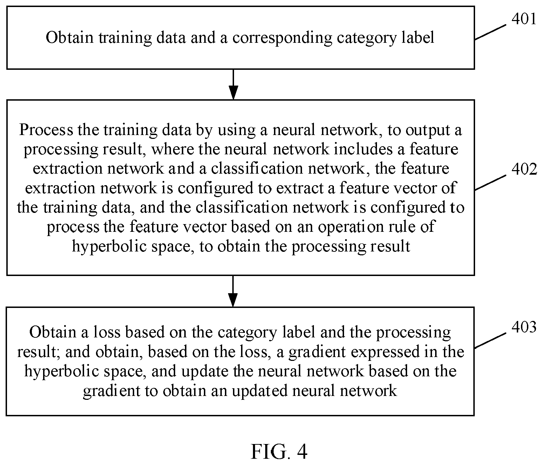

FIG. 4 is a schematic flowchart of a data processing method according to an embodiment of this application. As shown in FIG. 4, the data processing method provided in this embodiment of this application includes the following steps.

401: Obtain training data and a corresponding category label.

In this embodiment of this application, a training device may obtain the training data and the corresponding category label. The training data may include at least one of the following: natural language data, knowledge graph data, gene data, or image data. The category label is related to a type of a task to be implemented by a to-be-trained neural network. For example, for a neural network that needs to perform text classification, a category label of the neural network is a category of the training data. For a neural network that needs to perform semantic recognition, a category label of the neural network is semantics of the training data.

It should be noted that a tree-like hierarchical structure is common in data types such as the natural language data, a gene sequence, and a knowledge graph. For example, the natural language data includes a plurality of words, and a word is a super-concept of another word. Further, the natural language data may be understood as data having a tree-like hierarchical structure feature.

402: Process the training data by using a neural network, to output a processing result, where the neural network includes a feature extraction network and a classification network, the feature extraction network is configured to extract a feature vector of the training data, and the classification network is configured to process the feature vector based on an operation rule of hyperbolic space, to obtain the processing result.

In this embodiment of this application, the to-be-trained neural network may include the feature extraction network. The feature extraction network is configured to extract the feature vector expressed by the training data in the hyperbolic space, and then transfer the obtained feature vector to the classification network.

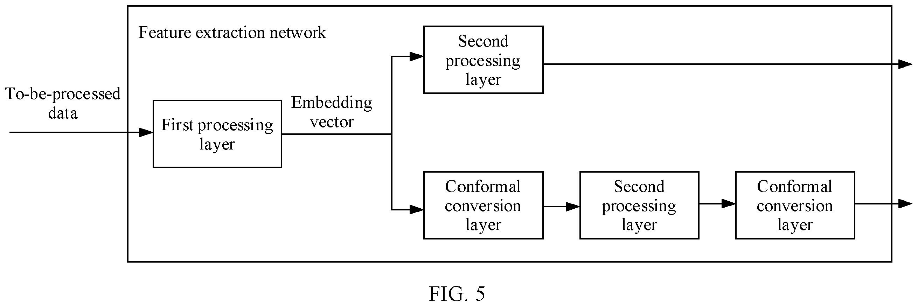

FIG. 5 is a schematic diagram of a structure of a feature extraction network according to an embodiment of this application. As shown in FIG. 5, in an implementation, the feature extraction network includes a first processing layer and a second processing layer. The first processing layer is configured to process the training data, to obtain an embedding vector corresponding to the training data. The second processing layer is configured to calculate a geometric center of the embedding vector in the hyperbolic space, to obtain the feature vector.

The first processing layer may be an input layer, and is configured to process the training data, to obtain the embedding vector corresponding to the training data. After obtaining the embedding vector, the second processing layer may obtain, through calculation, the geometric center (feature vector) of the embedding vector in the hyperbolic space. Specifically, a geometric mean extraction method of the hyperbolic space may be used to extract the feature vector.

As shown in FIG. 5, the embedding vector output by the first processing layer may be processed by using the second processing layer.

In an implementation, data in the hyperbolic space may be expressed based on a first conformal model and a second conformal model. The first conformal model represents that the hyperbolic space is mapped to Euclidean space in a first conformal mapping (conformal mapping) manner. The second conformal model represents that the hyperbolic space is mapped to the Euclidean space in a second conformal mapping manner. The embedding vector is expressed based on the first conformal model. The feature extraction network further includes a conformal conversion layer. The conformal conversion layer is configured to convert the embedding vector obtained by the first processing layer into a vector expressed based on the second conformal model, and input the vector expressed based on the second conformal model to the second processing layer. Correspondingly, the second processing layer is configured to calculate a geometric center of the vector expressed based on the second conformal model, to obtain the feature vector. The conformal conversion layer is further configured to convert the feature vector obtained by the second processing layer into a vector expressed based on the first conformal model, and input the vector expressed based on the first conformal model to the classification network.

For example, the first conformal model and the second conformal model may be a Poincare model (Poincare Model), a Hyperboloid model (Hyperboloid Model), or a Klein model. A conformal model is used to describe the hyperbolic space, and defines a series of vector algebraic transformations and geometric constraints of hyperbolic gyro vector space. Different conformal models have different properties. If the embedding vector output by the first processing layer is expressed based on the Poincare model (Poincare Model), and the second processing layer is configured to calculate a geometric average by using an Einstein midpoint, because the Einstein midpoint depends on the Klein model, the embedding vector output by the first processing layer needs to be converted into an embedding vector expressed based on the Klein model. The geometric center of the embedding vector expressed based on the Klein model is calculated by using the Einstein midpoint, to obtain the feature vector. In this case, the feature vector is expressed based on the Klein model. The conformal conversion layer is further configured to convert the feature vector obtained by the second processing layer into the vector expressed based on the first conformal model, and input the vector expressed based on the first conformal model into the classification network. In this case, the conformal conversion layer may convert the feature vector expressed based on the Klein model into a vector expressed based on the Poincare model (Poincare Model), and input the vector expressed based on the first conformal model into the classification network. For example, a method for calculating the Einstein midpoint may be as follows:

$$P = \frac{L_{xi} xi}{\sum i L_{xi} xi}.$$

$L_{xi}$ is a Lorentz factor, and P represents a feature representation calculated by the Einstein midpoint.

In this embodiment of this application, the classification network may include a plurality of neurons. Each neuron is configured to process input data based on an activation function. The activation function is configured to be expressed as an operation rule based on the hyperbolic space. The operation rule based on the hyperbolic space includes at least one of the following: Mobius Mobius matrix multiplication and Mobius addition.

The classification network may use vector algebraic transformation related to hyperbolic geometry to find a classification layer. For example, a Mobius linear classification layer is used, and its form is O = W * Mobius X + Mobius b, where O is an output parameter of the Mobius linear, W is a weight parameter, X is an input parameter, and b is a bias term. * Mobius indicates the Mobius matrix multiplication, and + Mobius indicates the Mobius addition. The Mobius matrix multiplication and the Mobius addition have different mathematical definitions in different conformal models. For example, the mathematical definitions of the Mobius matrix multiplication and the Mobius addition on the Poincare model may be as follows:

Mobius addition

$$\frac{(1 + 2c\langle x, y\rangle + c\|y\|_2^2)x + (1 - c\|x\|_2^2)y}{1 + 2c\langle x, y\rangle + c^2\|x\|_2^2\|y\|_2^2}$$

Mobius matrix multiplication

$$(1/\sqrt{c})\tanh\left(\frac{\|Mx\|_2}{\|x\|_2}\tanh^{-1}(\sqrt{c}\|x\|_2)\right)\frac{Mx}{\|Mx\|_2},$$

where c is curvature.

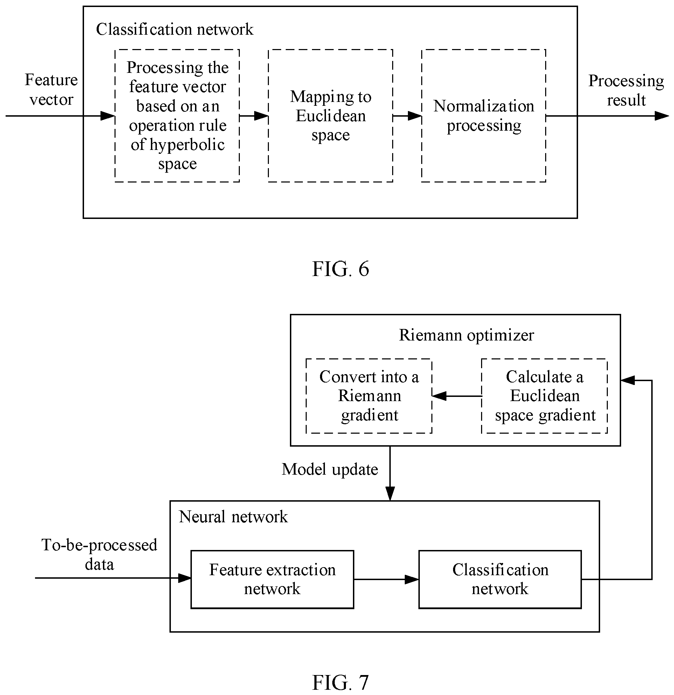

FIG. 6 is a schematic diagram of a structure of a classification network according to an embodiment of this application. As shown in FIG. 6, in this embodiment of this application, the classification network may be configured to: process the feature vector based on the operation rule of the hyperbolic space to obtain a to-be-normalized vector expressed in the hyperbolic space; and map the to-be-normalized vector to the Euclidean space, and perform normalization processing on the to-be-normalized vector mapped to the Euclidean space, to obtain the processing result.

In this embodiment of this application, output of the classification layer may be converted from the hyperbolic space to the Euclidean space. This is consistent with a subsequent target loss function. A mathematical definition of conversion may be as follows: $x_{new} = \frac{x * artanh(\sqrt{c}*\|x\|_2)}{\sqrt{c}*\|x\|_2}$ .

403: Obtain a loss based on the category label and the processing result; and obtain, based on the loss, a gradient expressed in the hyperbolic space, and update the neural network based on the gradient to obtain an updated neural network.

In this embodiment of this application, the loss may be obtained based on the category label and the processing result by using a target loss function. The target loss function is a function expressed in the Euclidean space. The gradient corresponding to the loss is calculated. The gradient is expressed in the Euclidean space. The gradient is converted into the gradient expressed in the hyperbolic space. The neural network is updated based on the gradient expressed in the hyperbolic space.

FIG. 7 is a schematic diagram of a structure of a Riemann optimizer according to an embodiment of this application. As shown in FIG. 7, a Euclidean space gradient is first calculated, and then mathematically converted into a Riemann gradient (that is, a gradient expressed in the hyperbolic space). Then, the Riemann gradient is converged to a conformal model, and parallel translation (that is, a weight in the neural network is updated) is performed based on the Riemann gradient to obtain the updated neural network.

In this embodiment of this application, the feature extraction network in the neural network is updated based on the gradient, to obtain an updated feature extraction network. The updated feature extraction network is configured to extract the feature vector expressed by the training data in the hyperbolic space.

The updated neural network includes the updated feature extraction network. The updated feature extraction network is configured to extract the feature vector expressed by the training data in the hyperbolic space.

An embodiment of this application provides a data processing method. The method includes: obtaining training data and a corresponding category label; and processing the training data by using a neural network, to output a processing result. The neural network includes a feature extraction network and a classification network. The feature extraction network is configured to extract a feature vector of the training data. The classification network is configured to process the feature vector based on hyperbolic space operation rule, to obtain the processing result. The method further includes: obtaining a loss based on the category label and the processing result; and obtaining, based on the loss, a gradient expressed in the hyperbolic space, and updating the neural network based on the gradient to obtain an updated neural network. Due to a feature of the hyperbolic space, expressing the feature vector in the hyperbolic space can enhance a fitting capability of a neural network model, and improve precision of processing by the model a data set including a tree-like hierarchical structure. For example, accuracy of text classification can be improved. In addition, the neural network model constructed based on the hyperbolic space greatly reduces a quantity of model parameters while improving the fitting capability of the model.

For example, the training data is natural language data. The following provides an embodiment that includes more details than FIG. 4.

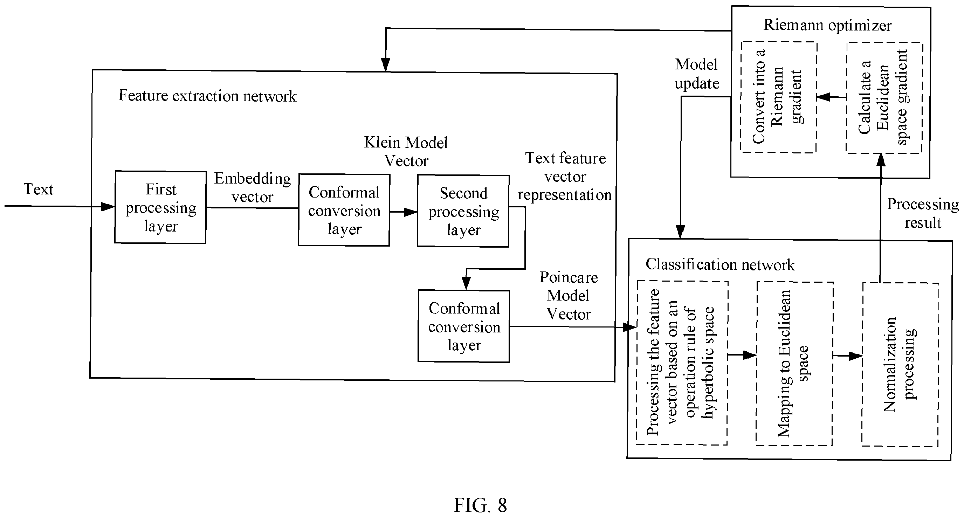

In an implementation, a Poincare model may be used as a hyperbolic conformal model. A schematic diagram of this embodiment may be shown in FIG. 8. Input text retrieval is based on an embedding (embedding) vector of the Poincare model. A text feature vector set is obtained and converted into a vector of a Klein model. A hyperbolic geometric average value is calculated by using an Einstein midpoint as a text feature vector representation. The text feature vector representation is restored to the Poincare model. Then, Mobius linear in hyperbolic geometry is used as a classification layer and an objective function is used to search for a classification plane. The Riemann optimizer is used for gradient calculation, and models of the feature extraction network and the classification network are updated based on the Riemann optimizer.

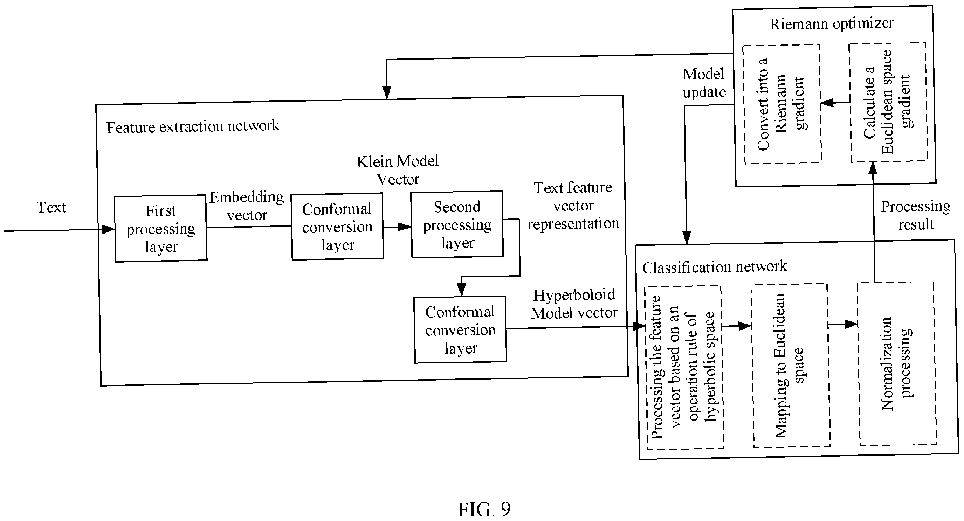

In an implementation, a Hyperboloid model may be used as a hyperbolic conformal model. A schematic diagram of this embodiment is shown in FIG. 9. Input text corpus retrieval is based on a hyperboloid input embedding vector of the Hyperboloid model. A feature vector set is obtained and converted into a vector of a Klein model. A hyperboloid geometric average value is calculated by using an Einstein midpoint as a feature vector representation. The text feature vector representation is restored to the Hyperboloid model. After the text feature vector representation is restored back to the Hyperboloid model, a Mobius linear classification layer in hyperbolic geometry is used to search for a classification plane based on the objective function. A Riemann optimizer is used for gradient calculation.

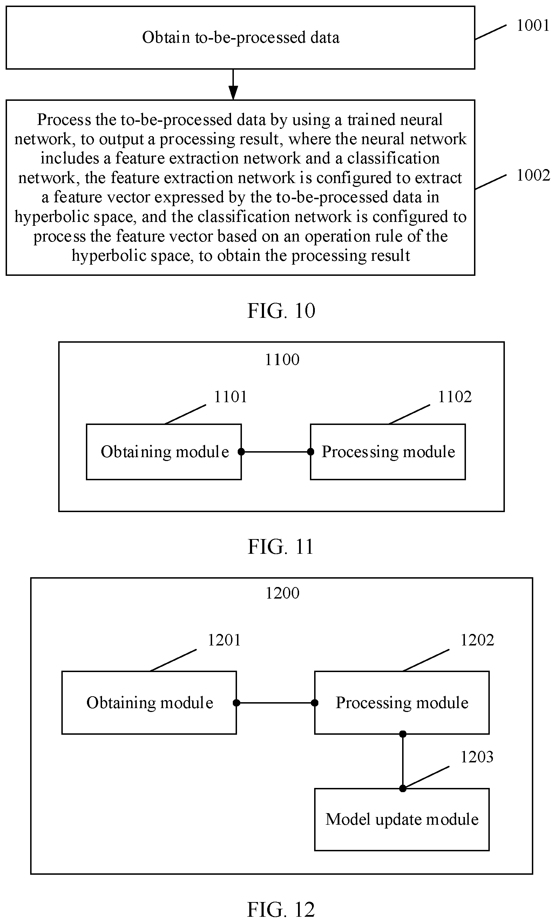

The following describes, from an application side, a data processing method provided in an embodiment of this application. FIG. 10 is a schematic flowchart of a data processing method according to an embodiment of this application. As shown in FIG. 10, the method includes the following steps.

1001: Obtain to-be-processed data.

In this embodiment of this application, a training device may obtain the to-be-processed data and a corresponding category label. The to-be-processed data may include at least one of the following: natural language data, knowledge graph data, gene data, or image data. The category label is related to a type of a task to be implemented by a to-be-trained neural network, for example, a neural network that performs text classification.

It should be noted that a tree-like hierarchical structure is common in data types such as the natural language data, a gene sequence, and a knowledge graph. For example, the natural language data includes a plurality of words, and a word is a super-concept of another word. Further, the natural language data may be understood as data having a tree-like hierarchical structure feature.

1002: Process the to-be-processed data by using a trained neural network, to output a processing result, where the neural network includes a feature extraction network and a classification network, the feature extraction network is configured to extract a feature vector expressed by the to-be-processed data in hyperbolic space, and the classification network is configured to process the feature vector based on an operation rule of the hyperbolic space, to obtain the processing result.

In this embodiment of this application, the trained neural network may include the feature extraction network. The feature extraction network is configured to extract the feature vector expressed by the to-be-processed data in the hyperbolic space, and then transfer the obtained feature vector to the classification network.

In an optional implementation, the to-be-processed data includes at least one of the following: natural language data, knowledge graph data, gene data, or image data.

In an optional implementation, the classification network includes a plurality of neurons. Each neuron is configured to process input data based on an activation function. The activation function is configured to be expressed as an operation rule based on the hyperbolic space.

In an optional implementation, the feature extraction network includes a first processing layer and a second processing layer.

The first processing layer is configured to process the to-be-processed data, to obtain an embedding vector represented by the to-be-processed data in the hyperbolic space.

The second processing layer is configured to calculate a geometric center of the embedding vector in the hyperbolic space, to obtain the feature vector.

The first processing layer may be an input layer, and is configured to process the to-be-processed data, to obtain the embedding vector corresponding to the to-be-processed data. After obtaining the embedding vector, the second processing layer may obtain, through calculation, the geometric center (feature vector) of the embedding vector in the hyperbolic space. Specifically, a geometric mean extraction method of the hyperbolic space may be used to extract the feature vector.

In an optional implementation, data in the hyperbolic space may be expressed based on a first conformal model and a second conformal model. The first conformal model represents that the hyperbolic space is mapped to Euclidean space in a first conformal mapping (conformal mapping) manner. The second conformal model represents that the hyperbolic space is mapped to the Euclidean space in a second conformal mapping manner. The embedding vector is expressed based on the first conformal model.

The feature extraction network further includes a conformal conversion layer.

The conformal conversion layer is configured to convert the embedding vector obtained by the first processing layer into a vector expressed based on the second conformal model, and input the vector expressed based on the second conformal model to the second processing layer.

Correspondingly, the second processing layer is configured to calculate a geometric center of the vector expressed based on the second conformal model, to obtain the feature vector.

The conformal conversion layer is further configured to convert the feature vector obtained by the second processing layer into a vector expressed based on the first conformal model, and input the vector expressed based on the first conformal model to the classification network.

In an implementation, the first conformal model and the second conformal model may be a Poincare model (Poincare Model), a hyperboloid model (Hyperboloid Model), or a Klein model. A conformal model is used to describe the hyperbolic space, and defines a series of vector algebraic transformations and geometric constraints of hyperbolic gyro vector space. Different conformal models have different properties. If the embedding vector output by the first processing layer is expressed based on the Poincare model (Poincare Model), and the second processing layer is configured to calculate a geometric average by using an Einstein midpoint, because the Einstein midpoint depends on the Klein model, the embedding vector output by the first processing layer needs to be converted into an embedding vector expressed based on the Klein model. The geometric center of the embedding vector expressed based on the Klein model is calculated by using the Einstein midpoint, to obtain the feature vector. In this case, the feature vector is expressed based on the Klein model. The conformal conversion layer is further configured to convert the feature vector obtained by the second processing layer into the vector expressed based on the first conformal model, and input the vector expressed based on the first conformal model into the classification network. In this case, the conformal conversion layer may convert the feature vector expressed based on the Klein model into a vector expressed based on the Poincare model (Poincare Model), and input the vector expressed based on the first conformal model into the classification network.

In an optional implementation, the classification network is configured to: process the feature vector based on the operation rule of the hyperbolic space to obtain a to-be-normalized vector expressed in the hyperbolic space; and map the to-be-normalized vector to the Euclidean space, and perform normalization processing on the to-be-normalized vector mapped to the Euclidean space, to obtain the processing result.

Embodiments of this application provide a data processing method, including: obtaining to-be-processed data; and processing the to-be-processed data by using a trained neural network, to output a processing result. The neural network includes a feature extraction network and a classification network. The feature extraction network is configured to extract a feature vector expressed by the to-be-processed data in hyperbolic space. The classification network is configured to process the feature vector based on an operation rule of the hyperbolic space, to obtain the processing result. In this application, precision of processing by a model a data set including a tree-like hierarchical structure can be improved, and a quantity of model parameters can be reduced.

The following describes a data processing apparatus provided in an embodiment of this application from a perspective of an apparatus. FIG. 11 is a schematic diagram of a data processing apparatus 1100 according to an embodiment of this application. As shown in FIG. 11, the data processing apparatus 1100 provided in this embodiment of this application includes:

an obtaining module 1101, configured to obtain to-be-processed data; and
a processing module 1102, configured to process the to-be-processed data by using a trained neural network, to output a processing result.

The neural network includes a feature extraction network and a classification network. The feature extraction network is configured to extract a feature vector expressed by the to-be-classification data in hyperbolic space. The classification network is configured to process the feature vector based on an operation rule of the hyperbolic space, to obtain the processing result.

In an optional implementation, the to-be-processed data includes at least one of the following: natural language data, knowledge graph data, gene data, or image data.

In an optional implementation, the classification network includes a plurality of neurons. Each neuron is configured to process input data based on an activation function. The activation function includes the operation rule based on the hyperbolic space.

In an optional implementation, the feature extraction network includes a first processing layer and a second processing layer.

The first processing layer is configured to process the to-be-processed data, to obtain an embedding vector represented by the to-be-processed data in the hyperbolic space.

The second processing layer is configured to calculate a geometric center of the embedding vector in the hyperbolic space, to obtain the feature vector.

In an optional implementation, the embedding vector is expressed based on a first conformal model.

The feature extraction network further includes a conformal conversion layer.

The conformal conversion layer is configured to convert the embedding vector obtained by the first processing layer into a vector expressed based on a second conformal model, and input the vector expressed based on the second conformal model to the second processing layer.

The second processing layer is configured to calculate a geometric center of the vector expressed based on the second conformal model, to obtain the feature vector.

The conformal conversion layer is further configured to convert the feature vector obtained by the second processing layer into a vector expressed based on the first conformal model, and input the vector expressed based on the first conformal model to the classification network. The first conformal model represents that the hyperbolic space is mapped to Euclidean space in a first conformal mapping (conformal mapping) manner. The second conformal model represents that the hyperbolic space is mapped to the Euclidean space in a second conformal mapping manner.

In an optional implementation, the embedding vector is expressed based on a second conformal model.

The second processing layer is configured to calculate a geometric center of the embedding vector expressed based on the second conformal model, to obtain the feature vector. The second conformal model represents that the hyperbolic space is mapped to Euclidean space in a second conformal mapping manner.

In an optional implementation, the classification network is configured to: process the feature vector based on the operation rule of the hyperbolic space to obtain a to-be-normalized vector expressed in the hyperbolic space; and map the to-be-normalized vector to the Euclidean space, and perform normalization processing on the to-be-normalized vector mapped to the Euclidean space, to obtain the processing result.

An embodiment of this application provides a data classification apparatus. The apparatus includes: an obtaining module, configured to obtain to-be-processed data; and a processing module, configured to process the to-be-processed data by using a trained neural network, to output a processing result. The neural network includes a feature extraction network and a classification network. The feature extraction network is configured to extract a feature vector expressed by the to-be-processed data in hyperbolic space. The classification network is configured to process the feature vector based on an operation rule of the hyperbolic space, to obtain the processing result. In this application, precision of processing by a model a data set including a tree-like hierarchical structure can be improved, and a quantity of model parameters can be reduced.

FIG. 12 is a schematic diagram of a data processing apparatus 1200 according to an embodiment of this application. As shown in FIG. 12, the data processing apparatus 1200 provided in this embodiment of this application includes:

an obtaining module 1201, configured to obtain to-be-processed data and a corresponding category label; and
a processing module 1202, configured to process the to-be-processed data by using a neural network, to output a processing result. The neural network includes a feature extraction network and a classification network. The feature extraction network is configured to extract a feature vector of the to-be-processed data. The classification network is configured to process the feature vector based on an operation rule of hyperbolic space, to obtain the processing result.

The apparatus further includes a model update module 1203, configured to: obtain a loss based on the category label and the processing result;
obtain, based on the loss, a gradient expressed in the hyperbolic space, and updating the neural network based on the gradient to obtain an updated neural network.

In an optional implementation, the model update module is configured to:
update the feature extraction network in the neural network based on the gradient, to obtain an updated feature extraction network. The updated feature extraction network is configured to extract the feature vector expressed by the training data in the hyperbolic space.

In an optional implementation, the training data includes at least one of the following:
natural language data, knowledge graph data, gene data, or image data.

In an optional implementation, the classification network includes a plurality of neurons. Each neuron is configured to process input data based on an activation function. The activation function includes the operation rule based on the hyperbolic space.

In an optional implementation, the feature extraction network includes a first processing layer and a second processing layer.

The first processing layer is configured to process the training data, to obtain an embedding vector corresponding to the training data.

The second processing layer is configured to calculate a geometric center of the embedding vector in the hyperbolic space, to obtain the feature vector.

In an optional implementation, the embedding vector is expressed based on a first conformal model.

The feature extraction network further includes a conformal conversion layer.

The conformal conversion layer is configured to convert the embedding vector obtained by the first processing layer into a vector expressed based on a second conformal model, and input the vector expressed based on the second conformal model to the second processing layer.

Correspondingly, the second processing layer is configured to calculate a geometric center of the vector expressed based on the second conformal model, to obtain the feature vector.

The conformal conversion layer is further configured to convert the feature vector obtained by the second processing layer into a vector expressed based on the first conformal model, and input the vector expressed based on the first conformal model to the classification network. The first conformal model represents that the hyperbolic space is mapped to Euclidean space in a first conformal mapping (conformal mapping) manner. The second conformal model represents that the hyperbolic space is mapped to the Euclidean space in a second conformal mapping manner.

In an optional implementation, data in the hyperbolic space is expressed based on a second conformal model. The second conformal model represents that the hyperbolic space is mapped to Euclidean space in a second conformal mapping manner. The embedding vector is expressed based on the second conformal model.

The second processing layer is configured to calculate a geometric center of the embedding vector expressed based on the second conformal model, to obtain the feature vector.

In an optional implementation, the classification network is configured to: process the feature vector based on the operation rule of the hyperbolic space to obtain a to-be-normalized vector expressed in the hyperbolic space; and map the to-be-normalized vector to the Euclidean space, and perform normalization processing on the to-be-normalized vector mapped to the Euclidean space, to obtain the processing result.

In an optional implementation, the loss obtaining module is configured to obtain the loss based on the category label, the processing result, and a target loss function. The target loss function is a function expressed in the Euclidean space.

In an optional implementation, the model update module is configured to: calculate the gradient corresponding to the loss, where the gradient is expressed in the Euclidean space; convert the gradient to a gradient expressed in the hyperbolic space; and update the neural network based on the gradient expressed in the hyperbolic space.

An embodiment of this application provides a data processing apparatus. The apparatus includes: an obtaining module, configured to obtain to-be-processed data and a corresponding category label; a processing module, configured to process the to-be-processed data by using a neural network, to output a processing result, where the neural network includes a feature extraction network and a classification network, the feature extraction network is configured to extract a feature vector of the to-be-processed data, and the classification network is configured to process the feature vector based on an operation rule of hyperbolic space, to obtain the processing result; and a model update module, configured to: obtain a loss based on the category label and the processing result, and update the neural network based on the loss to obtain an updated neural network. Due to a feature of the hyperbolic space, expressing the feature vector in the hyperbolic space can enhance a fitting capability of a neural network model, and improve precision of processing by the model a data set including a tree-like hierarchical structure. For example, accuracy of text classification can be improved. In addition, the neural network model constructed based on the hyperbolic space greatly reduces a quantity of model parameters while improving the fitting capability of the model.

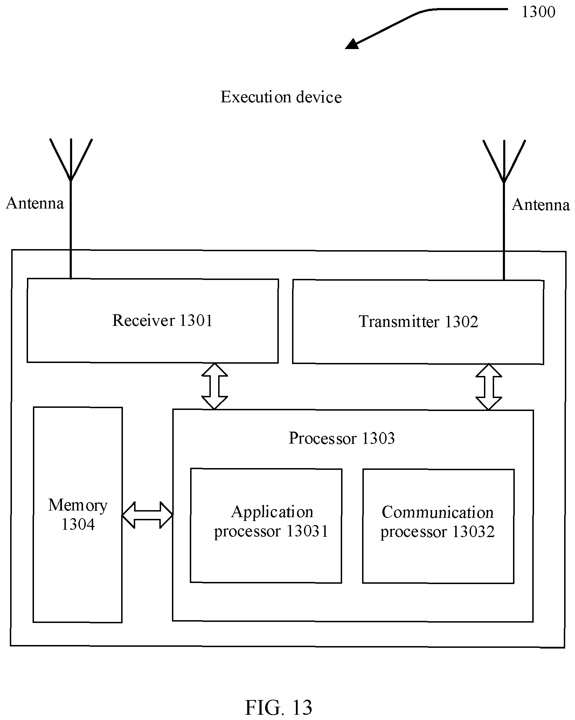

The following describes an execution device provided in an embodiment of this application. FIG. 13 is a schematic diagram of a structure of an execution device according to an embodiment of this application. The execution device 1300 may be specifically represented as a mobile phone, a tablet, a notebook computer, an intelligent wearable device, a server, or the like. This is not limited herein. The data processing apparatus described in the embodiment corresponding to FIG. 10 may be deployed on the execution device 1300, and is configured to implement the data processing function in the embodiment corresponding to FIG. 10. Specifically, the execution device 1300 includes a receiver 1301, a transmitter 1302, a processor 1303, and a memory 1304 (there may be one or more processors 1303 in the execution device 1300, and one processor is used as an example in FIG. 13.) The processor 1303 may include an application processor 13031 and a communication processor 13032. In some embodiments of this application, the receiver 1301, the transmitter 1302, the processor 1303, and the memory 1304 may be connected through a bus or in another manner.

The memory 1304 may include a read-only memory and a random access memory, and provide instructions and data for the processor 1303. A part of the memory 1304 may further include a non-volatile random access memory (non-volatile random access memory, NVRAM). The memory 1304 stores a processor and operation instructions, an executable module or a data structure, a subnet thereof, or an extended set thereof. The operation instructions may include various operation instructions to implement various operations.

The processor 1303 controls an operation of the execution device. In specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in the embodiments of this application may be applied to the processor 1303, or may be implemented by using the processor 1303. The processor 1303 may be an integrated circuit chip, and has a signal processing capability. In an implementation process, steps in the foregoing methods may be implemented by using a hardware integrated logical circuit in the processor 1303, or by using instructions in a form of software. The processor 1303 may be a general-purpose processor, a digital signal processor (digital signal processing, DSP), a microprocessor, or a microcontroller; or may include an application-specific integrated circuit (application specific integrated circuit, ASIC), a field-programmable gate array (field-programmable gate array, FPGA) or another programmable logic device, a discrete gate or transistor logic device, or a discrete hardware component. The processor 1303 may implement or perform the methods, steps, and logic block diagrams disclosed in embodiments of this application. The general-purpose processor may be a microprocessor, or the processor may be any conventional processor or the like. Steps of the methods disclosed with reference to embodiments of this application may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1304, and the processor 1303 reads information in the memory 1304 and completes the steps in the foregoing methods in combination with hardware in the processor 1303.

The receiver 1301 may be configured to: receive input digital or character information, and generate a signal input related to a related setting and function control of the execution device. The transmitter 1302 may be configured to output digital or character information through a first interface. The transmitter 1302 may be further configured to send instructions to a disk group through the first interface, to modify data in the disk group. The transmitter 1302 may further include a display device such as a display.

In this embodiment of this application, in one case, the processor 1303 is configured to perform the data processing method performed by the execution device in the embodiment corresponding to FIG. 4. Specifically, the processor 1303 may perform the following steps:

obtaining to-be-processed data; and processing the to-be-processed data by using a trained neural network, to output a processing result. The neural network includes a feature extraction network and a classification network. The feature extraction network is configured to extract a feature vector expressed by the to-be-processed data in hyperbolic space. The classification network is configured to process the feature vector based on an operation rule of the hyperbolic space, to obtain the processing result.

In an optional implementation, the to-be-processed data includes at least one of the following:

natural language data, knowledge graph data, gene data, or image data.

In an optional implementation, the classification network includes a plurality of neurons. Each neuron is configured to process input data based on an activation function. The activation function includes the operation rule based on the hyperbolic space.

In an optional implementation, the feature extraction network includes a first processing layer and a second processing layer. The first processing layer is configured to process the to-be-processed data, to obtain an embedding vector represented by the to-be-processed data in the hyperbolic space. The second processing layer is configured to calculate a geometric center of the embedding vector in the hyperbolic space, to obtain the feature vector.

The first processing layer may be an input layer, and is configured to process the to-be-processed data, to obtain the embedding vector corresponding to the to-be-processed data. After obtaining the embedding vector, the second processing layer may obtain, through calculation, the geometric center (feature vector) of the embedding vector in the hyperbolic space. Specifically, a geometric mean extraction method of the hyperbolic space may be used to extract the feature vector.

In an optional implementation, the embedding vector is expressed based on a first conformal model. The feature extraction network further includes a conformal conversion layer. The conformal conversion layer is configured to convert the embedding vector obtained by the first processing layer into a vector expressed based on a second conformal model, and input the vector expressed based on the second conformal model to the second processing layer. The second processing layer is configured to calculate a geometric center of the vector expressed based on the second conformal model, to obtain the feature vector. The conformal conversion layer is further configured to convert the feature vector obtained by the second processing layer into a vector expressed based on the first conformal model, and input the vector expressed based on the first conformal model to the classification network. The first conformal model represents that the hyperbolic space is mapped to Euclidean space in a first conformal mapping (conformal mapping) manner. The second conformal model represents that the hyperbolic space is mapped to the Euclidean space in a second conformal mapping manner.

In an optional implementation, the embedding vector is expressed based on a second conformal model.

The second processing layer is configured to calculate a geometric center of the embedding vector expressed based on the second conformal model, to obtain the feature vector. The second conformal model represents that the hyperbolic space is mapped to Euclidean space in a second conformal mapping manner.

In an optional implementation, the classification network is configured to: process the feature vector based on the operation rule of the hyperbolic space to obtain a to-be-normalized vector expressed in the hyperbolic space; and map the to-be-normalized vector to the Euclidean space, and perform normalization processing on the to-be-normalized vector mapped to the Euclidean space, to obtain the processing result.

In this embodiment of this application, output of the classification layer may be converted from the hyperbolic space to the Euclidean space, and is consistent with a subsequent target loss function.

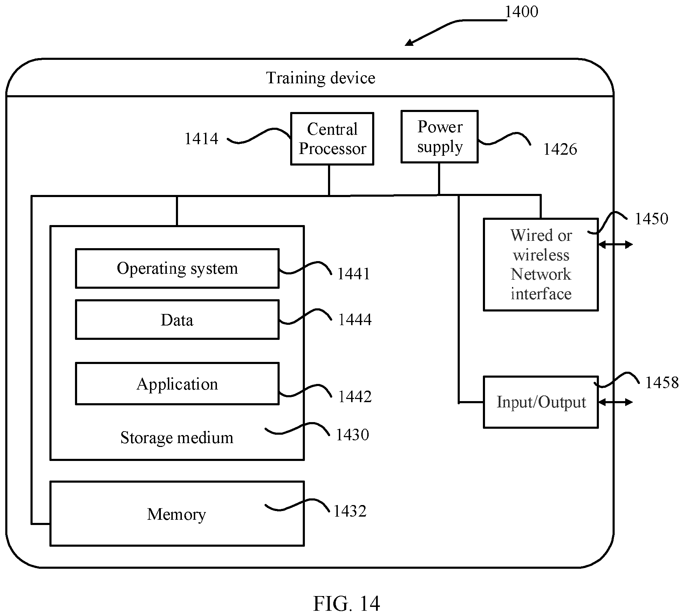

An embodiment of this application further provides a training device. FIG. 14 is a schematic diagram of a structure of a training device according to an embodiment of this application. Specifically, the training device 1400 is implemented by one or more servers. The training device 1400 may vary greatly due to different configurations or performance, and may include one or more central processing units (central processing units, CPU) 1414 (for example, one or more processors) and a memory 1432, and one or more storage media 1430 (for example, one or more mass storage devices) that stores an application 1442 or data 1444. The memory 1432 and the storage medium 1430 may be transient storage or persistent storage. A program stored in the storage medium 1430 may include one or more modules (not shown in the figure), and each module may include a series of instruction operations for the training device. Further, the central processing unit 1414 may be configured to communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458; and/or one or more operating systems 1441, for example, Windows ServerTM, Mac OS XTM, UnixTM, LinuxTM, and FreeBSDTM.

Specifically, the training device may perform the following steps:

obtaining training data and a corresponding category label; and
processing the training data by using a neural network, to output a processing result.

The neural network includes a feature extraction network and a classification network. The feature extraction network is configured to extract a feature vector of the training data. The classification network is configured to process the feature vector based on an operation rule of hyperbolic space, to obtain the processing result.

The training device further performs: obtaining a loss based on the category label and the processing result; and obtaining, based on the loss, a gradient expressed in the hyperbolic space, and updating the neural network based on the gradient to obtain an updated neural network.

In an optional implementation, the feature extraction network in the neural network is updated based on the gradient, to obtain an updated feature extraction network. The updated feature extraction network is configured to extract the feature vector expressed by the training data in the hyperbolic space.

In an optional implementation, the training data includes at least one of the following:
natural language data, knowledge graph data, gene data, or image data.

In an optional implementation, the classification network includes a plurality of neurons. Each neuron is configured to process input data based on an activation function. The activation function includes the operation rule based on the hyperbolic space.

In an optional implementation, the operation rule based on the hyperbolic space includes at least one of the following: Mobius Mobius matrix multiplication and Mobius addition.

In an optional implementation, the feature extraction network includes a first processing layer and a second processing layer.

The first processing layer is configured to process the training data, to obtain an embedding vector corresponding to the training data.

The second processing layer is configured to calculate a geometric center of the embedding vector in the hyperbolic space, to obtain the feature vector.

In an optional implementation, the embedding vector is expressed based on a first conformal model.

The feature extraction network further includes a conformal conversion layer.

The conformal conversion layer is configured to convert the embedding vector obtained by the first processing layer into a vector expressed based on a second conformal model, and input the vector expressed based on the second conformal model to the second processing layer.

Correspondingly, the second processing layer is configured to calculate a geometric center of the vector expressed based on the second conformal model, to obtain the feature vector.

The conformal conversion layer is further configured to convert the feature vector obtained by the second processing layer into a vector expressed based on the first conformal model, and input the vector expressed based on the first conformal model to the classification network. The first conformal model represents that the hyperbolic space is mapped to Euclidean space in a first conformal mapping (conformal mapping) manner. The second conformal model represents that the hyperbolic space is mapped to the Euclidean space in a second conformal mapping manner.

In an optional implementation, data in the hyperbolic space is expressed based on a second conformal model. The second conformal model represents that the hyperbolic space is mapped to Euclidean space in a second conformal mapping manner. The embedding vector is expressed based on the second conformal model.

The second processing layer is configured to calculate a geometric center of the embedding vector expressed based on the second conformal model, to obtain the feature vector.

In an optional implementation, the classification network is configured to: process the feature vector based on the operation rule of the hyperbolic space to obtain a to-be-normalized vector expressed in the hyperbolic space; and map the to-be-normalized vector to the Euclidean space, and perform normalization processing on the to-be-normalized vector mapped to the Euclidean space, to obtain the processing result.

In an optional implementation, the obtaining a loss based on the category label and the processing result includes:

obtaining the loss based on the category label, the processing result, and a target loss function. The target loss function is a function expressed in the Euclidean space.

In an optional implementation, the updating the neural network based on the loss includes:

calculating the gradient corresponding to the loss, where the gradient is expressed in the Euclidean space;
converting the gradient to a gradient expressed in the hyperbolic space; and
updating the neural network based on the gradient expressed in the hyperbolic space.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing methods described in the foregoing embodiments, or a chip in the training device performs the data processing methods described in the foregoing embodiments. Optionally, the storage unit is a storage unit in the chip, for example, a register or a cache; or the storage unit may be a storage unit that is in the radio access device end and that is located outside the chip, for example, a read-only memory (read-only memory, ROM), another type of static storage device that can store static information and instructions, or a random access memory (random access memory, RAM).

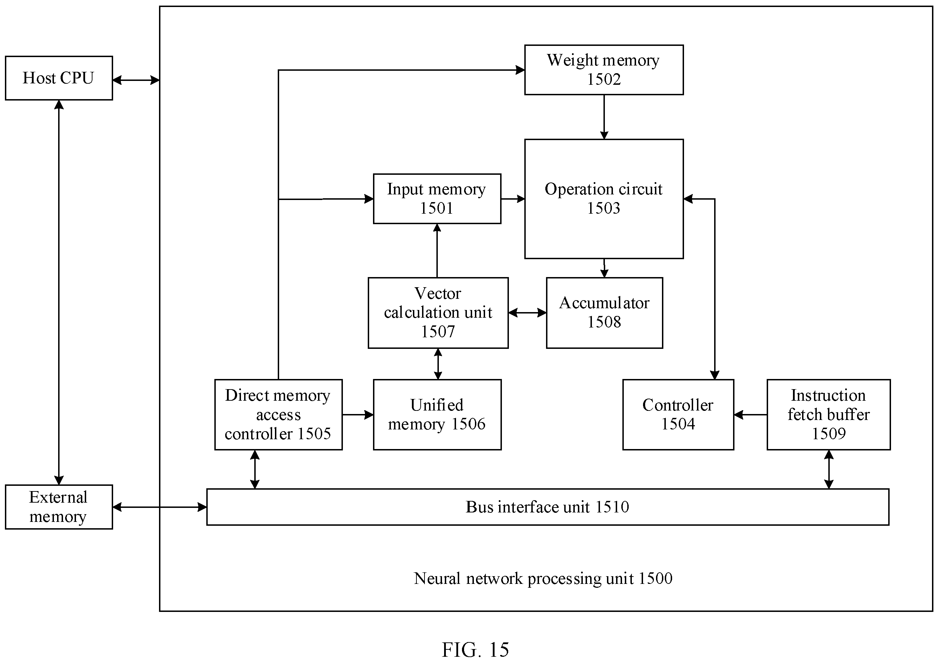

Specifically, FIG. 15 is a schematic diagram of a structure of a chip according to an embodiment of this application. The chip may be represented as a neural network processing unit NPU 1500. The NPU 1500 is mounted to a host CPU (Host CPU) as a coprocessor, and the host CPU allocates a task. A core part of the NPU is an operation circuit 1503, and a controller 1504 controls the operation circuit 1503 to extract matrix data in a memory and perform a multiplication operation.

In some implementations, the operation circuit 1503 internally includes a plurality of process units (Process Engine, PE). In some implementations, the operation circuit 1503 is a two-dimensional systolic array. The operation circuit 1503 may alternatively be a one-dimensional systolic array or another electronic circuit capable of performing mathematical operations such as multiplication and addition. In some implementations, the operation circuit 1503 is a general-purpose matrix processor.

For example, it is assumed that there is an input matrix A, a weight matrix B, and an output matrix C. The operation circuit fetches corresponding data of the matrix B from a weight memory 1502, and buffers the data on each PE in the operation circuit. The operation circuit obtains data of the matrix A from the input memory 1501 to perform a matrix operation on the matrix B, and stores an obtained partial result or an obtained final result of the matrix into an accumulator (accumulator) 1508.

A unified memory 1506 is configured to store input data and output data. Weight data is directly transferred to the weight memory 1502 by using a direct memory access controller (Direct Memory Access Controller, DMAC) DMAC 1505. The input data is also transferred to the unified memory 1506 by using the DMAC.

A BIU, bus interface unit, that is, a bus interface unit 1510, is configured for interaction between an AXI bus and the DMAC and interaction between the AXI bus and an instruction fetch buffer (Instruction Fetch Buffer, IFB) 1509.

The bus interface unit 1510 (Bus Interface Unit, BIU for short) is configured to obtain an instruction from an external memory by the instruction fetch buffer 1509, and is further configured to obtain original data of the input matrix A or the weight matrix B from the external memory by the direct memory access controller 1505.

The DMAC is mainly configured to transfer input data in the external memory DDR to the unified memory 1506, transfer weight data to the weight memory 1502, or transfer input data to the input memory 1501.

A vector calculation unit 1507 includes a plurality of operation processing units. If required, further processing is performed on an output of the operation circuit 1503, for example, vector multiplication, vector addition, an exponential operation, a logarithmic operation, or size comparison. The vector calculation unit 1507 is mainly configured to perform network computing, such as batch normalization (batch normalization), pixel-level summation, and upsampling of a feature plane, on a non-convolutional/fully-connected layer in a neural network.

In some implementations, the vector calculation unit 1507 can store a processed output vector in the unified memory 1506. For example, the vector calculation unit 1507 may apply a linear function or a non-linear function to the output of the operation circuit 1503, for example, perform linear interpolation on a feature plane extracted by the convolutional layer, for another example, add value vectors, to generate an activation value. In some implementations, the vector calculation unit 1507 generates a normalized value, a pixel-level summation value, or both. In some implementations, the processed output vector can be used as an activation input to the operation circuit 1503, for example, to be used in a subsequent layer in the neural network.

The instruction fetch buffer (instruction fetch buffer) 1509 connected to the controller 1504, configured to store instructions used by the controller 1504.

The unified memory 1506, the input memory 1501, the weight memory 1502, and the instruction fetch buffer 1509 are all on-chip memories. The external memory is private for the NPU hardware architecture.

The processor mentioned anywhere above may be a general-purpose central processing unit, a microprocessor, an ASIC, or one or more integrated circuits configured to control program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

**Claims**

1. A data processing method, wherein the method comprises:

   obtaining to-be-processed data; and
   processing the to-be-processed data by using a trained neural network, to output a processing result, wherein the neural network comprises a feature extraction network and a classification network, the feature extraction network is configured to extract a feature vector expressed by the to-be-processed data in hyperbolic space, and the classification network is configured to process the feature vector based on an operation rule of the hyperbolic space, to obtain the processing result.

2. The method according to claim 1, wherein the to-be-processed data comprises at least one of the following: natural language data, knowledge graph data, gene data, or image data.

3. The method according to claim 1 or 2, wherein the classification network comprises a plurality of neurons, each neuron is configured to process input data based on an activation function, and the activation function comprises the operation rule based on the hyperbolic space.

4. The method according to any one of claims 1 to 3, wherein the feature extraction network comprises a first processing layer and a second processing layer;

   the first processing layer is configured to process the to-be-processed data, to obtain an embedding vector represented by the to-be-processed data in the hyperbolic space; and
   the second processing layer is configured to calculate a geometric center of the embedding vector in the hyperbolic space, to obtain the feature vector.

5. The method according to claim 4, wherein the embedding vector is expressed based on a first conformal model;

   the feature extraction network further comprises a conformal conversion layer;
   the conformal conversion layer is configured to convert the embedding vector obtained by the first processing layer into a vector expressed based on a second conformal model, and input the vector expressed based on the second conformal model to the second processing layer;
   the second processing layer is configured to calculate a geometric center of the vector expressed based on the second conformal model, to obtain the feature vector; and
   the conformal conversion layer is further configured to convert the feature vector obtained by the second processing layer into a vector expressed based on the first conformal model, and input the vector expressed based on the first conformal model to the classification network, wherein the first conformal model represents that the hyperbolic space is mapped to Euclidean space in a first conformal mapping (conformal mapping) manner, and the second conformal model represents that the hyperbolic space is mapped to the Euclidean space in a second conformal mapping manner.

6. The method according to claim 4, wherein the embedding vector is expressed based on a second conformal model; the second processing layer is configured to calculate a geometric center of the embedding vector expressed based on the second conformal model, to obtain the feature vector, wherein the second conformal model represents that the hyperbolic space is mapped to Euclidean space in a second conformal mapping manner.

7. The method according to any one of claims 1 to 6, wherein the classification network is configured to: process the feature vector based on the operation rule of the hyperbolic space to obtain a to-be-normalized vector expressed in the hyperbolic space; and
   map the to-be-normalized vector to the Euclidean space, and perform normalization processing on the to-be-normalized vector mapped to the Euclidean space, to obtain the processing result.

8. A data processing method, wherein the method comprises:

obtaining training data and a corresponding category label;
processing the training data by using a neural network, to output a processing result, wherein
the neural network comprises a feature extraction network and a classification network, the feature extraction network is configured to extract a feature vector of the training data, and the classification network is configured to process the feature vector based on an operation rule of hyperbolic space, to obtain the processing result;
obtaining a loss based on the category label and the processing result; and
obtaining, based on the loss, a gradient expressed in the hyperbolic space, and updating the neural network based on the gradient to obtain an updated neural network.

9.  The method according to claim 8, wherein the updating the neural network based on the gradient to obtain an updated neural network comprises:
updating the feature extraction network in the neural network based on the gradient, to obtain an updated feature extraction network, wherein the updated feature extraction network is configured to extract the feature vector expressed by the training data in the hyperbolic space.

10. The method according to claim 8 or 9, wherein the training data comprises at least one of the following:
natural language data, knowledge graph data, gene data, or image data.

11. The method according to any one of claims 8 to 10, wherein the classification network comprises a plurality of neurons, each neuron is configured to process input data based on an activation function, and the activation function comprises the operation rule based on the hyperbolic space.

12. The method according to any one of claims 8 to 11, wherein the feature extraction network comprises a first processing layer and a second processing layer;

the first processing layer is configured to process the training data, to obtain an embedding vector corresponding to the training data; and
the second processing layer is configured to calculate a geometric center of the embedding vector in the hyperbolic space, to obtain the feature vector.

13. The method according to claim 12, wherein the embedding vector is expressed based on a first conformal model;

the feature extraction network further comprises a conformal conversion layer;
the conformal conversion layer is configured to convert the embedding vector obtained by the first processing layer into a vector expressed based on a second conformal model, and input the vector expressed based on the second conformal model to the second processing layer;
correspondingly, the second processing layer is configured to calculate a geometric center of the vector expressed based on the second conformal model, to obtain the feature vector; and
the conformal conversion layer is further configured to convert the feature vector obtained by the second processing layer into a vector expressed based on the first conformal model, and input the vector expressed based on the first conformal model to the classification network, wherein the first conformal model represents that the hyperbolic space is mapped to Euclidean space in a first conformal mapping (conformal mapping) manner, and the second conformal model represents that the hyperbolic space is mapped to the Euclidean space in a second conformal mapping manner.

14. The method according to claim 12, wherein data in the hyperbolic space is expressed based on a second conformal model, the second conformal model represents that the hyperbolic space is mapped to Euclidean space in a second conformal mapping manner, and the embedding vector is expressed based on the second conformal model; and
the second processing layer is configured to calculate a geometric center of the embedding vector expressed based on the second conformal model, to obtain the feature vector.

15. The method according to any one of claims 8 to 14, wherein the classification network is configured to: process the feature vector based on the operation rule of the hyperbolic space to obtain a to-be-normalized vector expressed in the hyperbolic space; and
map the to-be-normalized vector to the Euclidean space, and perform normalization processing on the to-be-normalized vector mapped to the Euclidean space, to obtain the processing result.

16. The method according to claim 15, wherein the obtaining a loss based on the category label and the processing result comprises:
obtaining the loss based on the category label, the processing result, and a target loss function, wherein the target loss function is a function expressed in the Euclidean space.

17. The method according to claim 15 or 16, wherein the updating the neural network based on the loss comprises:

calculating the gradient corresponding to the loss, wherein the gradient is expressed in the Euclidean space;
converting the gradient to a gradient expressed in the hyperbolic space; and
updating the neural network based on the gradient expressed in the hyperbolic space.

18. A data classification apparatus, wherein the apparatus comprises:

an obtaining module, configured to obtain to-be-processed data; and
a processing module, configured to process the to-be-processed data by using a trained neural network, to output a processing result, wherein
the neural network comprises a feature extraction network and a classification network, the feature extraction network is configured to extract a feature vector expressed by the to-be-classification data in hyperbolic space, and the classification network is configured to process the feature vector based on an operation rule of the hyperbolic space, to obtain the processing result.

19. The apparatus according to claim 18, wherein the to-be-processed data comprises at least one of the following: natural language data, knowledge graph data, gene data, or image data.

20. The apparatus according to claim 18 or 19, wherein the classification network comprises a plurality of neurons, each neuron is configured to process input data based on an activation function, and the activation function comprises the operation rule based on the hyperbolic space.

21. The apparatus according to any one of claims 18 to 20, wherein the feature extraction network comprises a first processing layer and a second processing layer;

the first processing layer is configured to process the to-be-processed data, to obtain an embedding vector represented by the to-be-processed data in the hyperbolic space; and
the second processing layer is configured to calculate a geometric center of the embedding vector in the hyperbolic space, to obtain the feature vector.

22. The apparatus according to claim 21, wherein the embedding vector is expressed based on a first conformal model;

the feature extraction network further comprises a conformal conversion layer;
the conformal conversion layer is configured to convert the embedding vector obtained by the first processing layer into a vector expressed based on a second conformal model, and input the vector expressed based on the second conformal model to the second processing layer;
the second processing layer is configured to calculate a geometric center of the vector expressed based on the second conformal model, to obtain the feature vector; and
the conformal conversion layer is further configured to convert the feature vector obtained by the second processing layer into a vector expressed based on the first conformal model, and input the vector expressed based on the first conformal model to the classification network, wherein the first conformal model represents that the hyperbolic space is mapped to Euclidean space in a first conformal mapping (conformal mapping) manner, and the second conformal model represents that the hyperbolic space is mapped to the Euclidean space in a second conformal mapping manner.

23. The apparatus according to claim 21, wherein the embedding vector is expressed based on a second conformal model;
the second processing layer is configured to calculate a geometric center of the embedding vector expressed based on the second conformal model, to obtain the feature vector, wherein the second conformal model represents that the hyperbolic space is mapped to Euclidean space in a second conformal mapping manner.

24. The apparatus according to any one of claims 18 to 23, wherein the classification network is configured to: process the feature vector based on the operation rule of the hyperbolic space to obtain a to-be-normalized vector expressed in the hyperbolic space; and
map the to-be-normalized vector to the Euclidean space, and perform normalization processing on the to-be-normalized vector mapped to the Euclidean space, to obtain the processing result.

25. A data processing apparatus, wherein the apparatus comprises:

an obtaining module, configured to obtain training data and a corresponding category label;
a processing module, configured to process the training data by using a neural network, to output a processing result, wherein
the neural network comprises a feature extraction network and a classification network, the feature extraction network is configured to extract a feature vector of the training data, and the classification network is configured to process the feature vector based on an operation rule of hyperbolic space, to obtain the processing result;
obtaining a loss based on the category label and the processing result; and
a model update module, configured to obtain, based on the loss, a gradient expressed in the hyperbolic space, and update the neural network based on the gradient to obtain an updated neural network.

26. The apparatus according to claim 25, wherein the model update module is configured to:
update the feature extraction network in the neural network based on the gradient, to obtain an updated feature extraction network, wherein the updated feature extraction network is configured to extract the feature vector expressed by the training data in the hyperbolic space.

27. The apparatus according to claim 25 or 26, wherein the training data comprises at least one of the following:
natural language data, knowledge graph data, gene data, or image data.

28. The apparatus according to any one of claims 25 to 27, wherein the classification network comprises a plurality of neurons, each neuron is configured to process input data based on an activation function, and the activation function comprises the operation rule based on the hyperbolic space.

29. The apparatus according to any one of claims 25 to 28, wherein the feature extraction network comprises a first processing layer and a second processing layer;

the first processing layer is configured to process the training data, to obtain an embedding vector corresponding to the training data; and
the second processing layer is configured to calculate a geometric center of the embedding vector in the hyperbolic space, to obtain the feature vector.

30. The apparatus according to claim 29, wherein the embedding vector is expressed based on a first conformal model;

the feature extraction network further comprises a conformal conversion layer;
the conformal conversion layer is configured to convert the embedding vector obtained by the first processing layer into a vector expressed based on a second conformal model, and input the vector expressed based on the second conformal model to the second processing layer;
correspondingly, the second processing layer is configured to calculate a geometric center of the vector expressed based on the second conformal model, to obtain the feature vector; and
the conformal conversion layer is further configured to convert the feature vector obtained by the second processing layer into a vector expressed based on the first conformal model, and input the vector expressed based on the first conformal model to the classification network, wherein the first conformal model represents that the hyperbolic space is mapped to Euclidean space in a first conformal mapping (conformal mapping) manner, and the second conformal model represents that the hyperbolic space is mapped to the Euclidean space in a second conformal mapping manner.

31. The apparatus according to claim 29, wherein data in the hyperbolic space is expressed based on a second conformal model, the second conformal model represents that the hyperbolic space is mapped to Euclidean space in a second conformal mapping manner, and the embedding vector is expressed based on the second conformal model; and
the second processing layer is configured to calculate a geometric center of the embedding vector expressed based on the second conformal model, to obtain the feature vector.

32. The apparatus according to any one of claims 25 to 31, wherein the classification network is configured to: process the feature vector based on the operation rule of the hyperbolic space to obtain a to-be-normalized vector expressed in the hyperbolic space; and

map the to-be-normalized vector to the Euclidean space, and perform normalization processing on the to-be-normalized vector mapped to the Euclidean space, to obtain the processing result.

33. The apparatus according to claim 32, wherein the loss obtaining module is configured to obtain the loss based on the category label, the processing result, and a target loss function, wherein the target loss function is a function expressed in the Euclidean space.

34. The apparatus according to claim 32 or 33, wherein the model update module is configured to: calculate the gradient corresponding to the loss, wherein the gradient is expressed in the Euclidean space; convert the gradient to a gradient expressed in the hyperbolic space; and update the neural network based on the gradient expressed in the hyperbolic space.

35. A data processing apparatus, wherein the apparatus comprises a memory and a processor, the memory stores code, and the processor is configured to obtain the code and perform the method according to any one of claims 1 to 17.

36. A computer storage medium, wherein the computer storage medium stores one or more instructions, and when the one or more instruction is/are executed by one or more computers, the one or more computers is/are enabled to perform the method according to any one of claims 1 to 17.

Intelligent information chain

Smart product and industry application

| Translation/ Text analysis/... | Voice/Visual/Image/... |

Data

Data processing:

| Data training/Machine learning/ Deep learning | Search/Reasoning/ Decision-making | ... |

Infrastructure | Sensor | Smart chip | Basic platform | ... |

IT value chain

EP 4 152 212 A1

29

FIG. 1

FIG. 2a

| User | Intelligent terminal |

13:21

Interaction interface

| Voice/Query statement/ Text... | Voice response/ Response Statement/Text... | ... |

Memory | Processor | Data training/Machine learning/Deep learning | Search/Reasoning/ Decision-making | ...

Smart terminal

FIG. 2b

300

Data storage system 350

Execution device 310

...

Communication network

Local device 301

Local device 302

Examples are as follows:

FIG. 2c

FIG. 3

Obtain training data and a corresponding category label ⌐ 401

Process the training data by using a neural network, to output a processing result, where the neural network includes a feature extraction network and a classification network, the feature extraction network is configured to extract a feature vector of the training data, and the classification network is configured to process the feature vector based on an operation rule of hyperbolic space, to obtain the processing result ⌐ 402

Obtain a loss based on the category label and the processing result; and obtain, based on the loss, a gradient expressed in the hyperbolic space, and update the neural network based on the gradient to obtain an updated neural network ⌐ 403

FIG. 4

To-be-processed data

Feature extraction network

First processing layer

Embedding vector

Second processing layer

Conformal conversion layer

Second processing layer

Conformal conversion layer

FIG. 5

Classification network

Feature vector →

| Processing the feature vector based on an operation rule of hyperbolic space | → | Mapping to Euclidean space | → | Normalization processing |

→ Processing result

FIG. 6

Riemann optimizer

| Convert into a Riemann gradient | ← | Calculate a Euclidean space gradient |

Model update ↓

Neural network

To-be-processed data →

| Feature extraction network | → | Classification network |

FIG. 7

FIG. 8

Riemann optimizer

Calculate a Euclidean space gradient

Convert into a Riemann gradient

Processing result

Classification network

Normalization processing

Mapping to Euclidean space

Processing the feature vector based on an operation rule of hyperbolic space

Model update

Feature extraction network

Text feature vector representation

Klein Model Vector

Hyperboloid Model vector

First processing layer

Conformal conversion layer

Second processing layer

Conformal conversion layer

Embedding vector

Text

FIG. 9

| Obtain to-be-processed data | 1001 |

Process the to-be-processed data by using a trained neural network, to output a processing result, where the neural network includes a feature extraction network and a classification network, the feature extraction network is configured to extract a feature vector expressed by the to-be-processed data in hyperbolic space, and the classification network is configured to process the feature vector based on an operation rule of the hyperbolic space, to obtain the processing result — 1002

FIG. 10

1100

1101                    1102

| Obtaining module |———| Processing module |

FIG. 11

1200

1201                    1202

| Obtaining module |———| Processing module |

1203

| Model update module |

FIG. 12

1300

Execution device

| Antenna | | Antenna |
|---------|---|---------|

| Receiver 1301 | Transmitter 1302 |
|---------------|------------------|

Processor 1303

| Memory 1304 | Application processor 13031 | Communication processor 13032 |
|-------------|------------------------------|-------------------------------|

FIG. 13

FIG. 14

FIG. 15

## INTERNATIONAL SEARCH REPORT

| International application No. |
| --- |
| **PCT/CN2021/101225** |

**A. CLASSIFICATION OF SUBJECT MATTER**

G06N 3/04(2006.01)i

According to International Patent Classification (IPC) or to both national classification and IPC

**B. FIELDS SEARCHED**

Minimum documentation searched (classification system followed by classification symbols)

G06N; G06K; G06F

Documentation searched other than minimum documentation to the extent that such documents are included in the fields searched

Electronic data base consulted during the international search (name of data base and, where practicable, search terms used)

WPI; EPODOC; CNKI; CNPAT; BAIDU: 神经网络, 双曲空间, 庞加莱模型, 向量, 几何中心, 共形映射, neural w network, Hyperbolic, Poincare w model, Klein w model, vector, midpoint, conformal w mapping

**C. DOCUMENTS CONSIDERED TO BE RELEVANT**

| Category* | Citation of document, with indication, where appropriate, of the relevant passages | Relevant to claim No. |
| --- | --- | --- |
| X | TAY, Yi et al. "Hyperbolic Representation Learning for Fast and Efficient Neural Question Answering" *http://arxiv.org/abs/1707.07847*, 23 November 2017 (2017-11-23), sections 3-4 | 1-3, 7-11, 15-20, 24-28, 32-36 |
| Y | TAY, Yi et al. "Hyperbolic Representation Learning for Fast and Efficient Neural Question Answering" *http://arxiv.org/abs/1707.07847*, 23 November 2017 (2017-11-23), sections 3-4 | 4-7, 12-17, 21-24, 29-36 |
| Y | GULCEHRE, Caglar et al. "Hyperbolic Attention Networks" *http://arxiv.org/abs/1805.09786*, 24 May 2018 (2018-05-24), section 4 | 4-7, 12-17, 21-24, 29-36 |
| PX | CN 111898636 A (HUAWEI TECHNOLOGIES CO., LTD.) 06 November 2020 (2020-11-06) claims 1-36 | 1-36 |
| A | CN 110544310 A (TAIYUAN NORMAL UNIVERSITY) 06 December 2019 (2019-12-06) entire document | 1-36 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 September 2021** | **24 September 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/101225**

| Patent document cited in search report | | | Publication date (day/month/year) | Patent family member(s) | Publication date (day/month/year) |
|---|---|---|---|---|---|
| CN | 111898636 | A | 06 November 2020 | None | |
| CN | 110544310 | A | 06 December 2019 | None | |

Form PCT/ISA/210 (patent family annex) (January 2015)

**EP 4 152 212 A1**

## REFERENCES CITED IN THE DESCRIPTION

**Patent documents cited in the description**

- CN 202010596738